# EUROPEAN PATENT SPECIFICATION

(11) **EP 3 820 130 B1**
(45) Date of publication and mention of the grant of the patent: **20.12.2023**
(21) Application number: 18931131.9
(22) Date of filing: 23.08.2018
(51) Int. Cl.: H04M 1/725, G06F 3/048, H04M 1/72427, H04M 1/72448, H04M 1/72451, G06F 3/0481, G06F 3/0488, G06F 3/04886

(54) **METHOD AND ELECTRONIC DEVICE FOR PROCESSING NOTIFICATION MESSAGE**
VERFAHREN UND ELEKTRONISCHE VORRICHTUNG ZUR VERARBEITUNG VON BENACHRICHTIGUNGSNACHRICHTEN
PROCÉDÉ ET DISPOSITIF ÉLECTRONIQUE DE TRAITEMENT D'UN MESSAGE DE NOTIFICATION

(43) Date of publication of application: 12.05.2021
(73) Proprietor: HUAWEI TECHNOLOGIES CO., LTD., Shenzhen, Guangdong 518129 (CN)
(72) Inventor: LIU, Haibo, Shenzhen, Guangdong 518129 (CN); TU, Yongfeng, Shenzhen, Guangdong 518129 (CN)
(74) Representative: Thun, Clemens
(86) International application number: PCT/CN2018/101982
(87) International publication number: WO 2020/037611

(56) References cited:
- EP-A2- 2 639 695
- WO-A1-99/23579
- WO-A2-2007/088332
- CN-A- 106 201 223
- CN-A- 106 201 249
- CN-A- 106 598 403
- CN-A- 108 111 675
- JP-A- 2016 024 513
- KR-A- 20160 090 709
- US-A1- 2002 116 541
- US-A1- 2016 019 604

## Description

### TECHNICAL FIELD

Embodiments of this application relate to the field of electronic technologies, and in particular, to a notification message processing method and an electronic device.

### BACKGROUND

With development of an intelligent electronic device such as a mobile phone, the electronic device has increasingly powerful functions, and more tasks can be executed on the electronic device.

When the electronic device is running an application, if a notification message generated by the current application or another application is received, the electronic device may notify a user of the notification message. For example, when the user is playing a game, if the electronic device receives a headline message, the electronic device may display the headline message on a game interface. In this case, a notification message displayed by the electronic device obscures the current game interface, thereby causing visual interference to the user. In addition, when the user accidentally touches an area in which the notification message is located, the electronic device is incorrectly switched to a headline application, thereby disturbing and interrupting a game process of the user. Therefore, user experience is relatively poor.

The document US 2002/116541 A1 shows a communications device, which has several modes of operation. A user can set, for each mode of operation, different notification rules. In contrast to the present invention, interaction of different applications with regard to notifications are not shown.

The document WO 2002/088332 A2 shows a further communication device, which has several modes of operation. Also here, a user can set different notification rules for different modes of operation. In contrast to the present invention, the use of a touch screen, and the interaction of different application with regard to notifications is not shown there.

### SUMMARY

Embodiments of this application provide a notification message processing method and an electronic device, to determine a notification type of a notification message based on an application displayed in the foreground, thereby reducing interference from the notification message to the application displayed in the foreground.

To achieve the foregoing objective, the following technical solutions are used in the embodiments.

According to one aspect, a technical solution of this application provides a notification message processing method, performed by an electronic device, including: An electronic device displays a first interface of a first application on a touchscreen. After the electronic device receives a first notification message of a second application, the electronic device determines a first target notification type of the first notification message based on the first interface. Then, the electronic device processes the first notification message based on the first target notification type. The electronic device displays a second interface of the first application on the touchscreen. After the electronic device receives a second notification message of the second application, the electronic device determines a second target notification type of the second notification message based on the second interface. Then, the electronic device processes the second notification message based on the second target notification type. The first target notification type is different from the second target notification type.

In this solution, the electronic device may dynamically determine, based on different interfaces of an application displayed in the foreground, different notification types of different notification messages received by the electronic device, thereby reducing, in real time, interference to the first application displayed in the foreground.

In a possible implementation, different interfaces of the first application separately correspond to first notification types. A first notification type corresponding to the first interface is the first target notification type, and a first notification type corresponding to the second interface is the second target notification type.

In this way, the electronic device may dynamically determine, based on first notification types separately corresponding to the different interfaces of the application displayed in the foreground, the different notification types of the different notification messages received by the electronic device, thereby reducing, in real time, interference to the first application displayed in the foreground.

In another possible implementation, different interfaces of the first application separately correspond to first notification types, and the second application corresponds to a second notification type. That the electronic device determines a first target notification type of the first notification message based on the first interface includes: The electronic device determines a first intersection set of a first notification type corresponding to the first interface of the first application and the second notification type, where a notification type in the first intersection set is the first target notification type. That the electronic device determines a second target notification type of the second notification message based on the second interface includes: The electronic device determines a second intersection set of a first notification type corresponding to the second interface of the first application and the second notification type, where a notification type in the second intersection set is the second target notification type.

In this solution, the electronic device may determine a notification type of a notification message based on a first notification type corresponding to a current interface of the first application displayed in the foreground and the second notification type of the second application that generates the notification message.

The first notification type corresponding to the second interface is different from the first notification type corresponding to the first interface.

In another possible implementation, after the second interface of the first application is displayed on the touchscreen, the method further includes: The electronic device determines a third target notification type of the first notification message based on the first interface and the second interface. The electronic device processes the first notification message based on the third target notification type.

In this solution, the electronic device may perform a plurality of times of processing on a same notification message of the second application based on the different interfaces of the first application displayed in the foreground, so that a user can learn of the notification message as much as possible while dynamically reducing, in real time, interference to the first application displayed in the foreground.

In an example not covered by the invention, the electronic device determines a third target notification type of the first notification message based on the first interface and the second interface includes: The electronic device determines the third target notification type that is in notification types in the second intersection set and that is not executed for the first notification message when the electronic device displays the first interface. The second intersection set is an intersection set of the first notification type corresponding to the second interface of the first application and the second notification type.

In this solution, the electronic device may determine a notification type of a notification message based on the first notification types corresponding to the first interface and the second interface of the first application displayed in the foreground and the second notification type of the second application that generates the notification message.

In another example, not covered by the invention, the method further includes: If a notification type used for the first notification message when the electronic device currently displays an interface of the first application does not entirely include the second notification type, the electronic device determines a fourth target notification type of the first notification message after stopping displaying the interface of the first application. Then, the electronic device processes the first notification message based on the determined fourth target notification type.

In this solution, after exiting the display of the interface of the first application in the foreground, the electronic device may process a notification message generated when the first application is displayed in the foreground.

In another example, not covered by the invention, the electronic device determines a fourth target notification type of the first notification message includes: The electronic device determines the fourth target notification type that is in the second notification type and that is not executed for the first notification message when the electronic device currently displays the interface of the first application.

In other words, for a notification message that is of the second application and that is generated when the interface of the first application is displayed in the foreground, a set of a notification type used for the notification message when the electronic device displays the interface of the first application in the foreground and a notification type used for the notification message after the electronic device exits the display of the interface of the first application in the foreground is the second notification type corresponding to the second application.

In another possible implementation, the first application is a game, and the first interface is a loading interface, a home screen, a combat interface, or a shopping interface.

In another example, not covered by the invention, the first application is a video player, and the first interface is an interface in which no video is played or an interface in which a video is played; or the first interface is a full-screen play interface or a non-full-screen play interface.

According to another example, not covered by the invention, a technical solution of this application provides a notification message processing method, including: An electronic device displays a first interface of a first application on a touchscreen; receives a first notification message of a second application; determines a first target notification type of the first notification message based on the first interface; and processes the first notification message based on the first target notification type. The electronic device displays a second interface of the first application on the touchscreen; receives a second notification message of the second application; determines a second target notification type of the second notification message based on the second interface; and processes the second notification message based on the second target notification type. After the second interface of the first application is displayed on the touchscreen, the electronic device determines a third target notification type of the first notification message based on the first interface and the second interface; and processes the first notification message based on the third target notification type. If a notification type used for the first notification message when the electronic device currently displays an interface of the first application does not entirely include a second notification type, the electronic device determines a fourth target notification type of the first notification message after stopping displaying the interface of the first application; and processes the first notification message based on the determined fourth target notification type.

In this solution, for a notification message that is of the second application and that is generated when the interface of the first application is displayed in the foreground, the electronic device may determine a notification type of the notification message based on a first notification type corresponding to a current interface and the second notification type corresponding to the first application, and perform a plurality of times of processing on the notification message when displaying the interface of the first application in the foreground and after exiting the display of the interface of the first application in the foreground. According to another aspect, a technical solution of this application provides a notification message processing method, including: An electronic device displays a first interface of a first application on a touchscreen, and after receiving a first notification message of a second application, the electronic device determines a first target notification type of the first notification message based on the first interface. Then, the electronic device processes the first notification message based on the first target notification type.

In this solution, the electronic device may determine a notification type of a notification message of the second application based on an interface of the first application displayed in the foreground, so as not to interfere with, as much as possible, normal running of the first application displayed in the foreground.

Different interfaces of the first application separately correspond to first notification types, and a first notification type corresponding to the first interface is the first target notification type.

According to another example, not covered by the invention, a technical solution of this application provides a notification message processing method, including: displaying a first interface of a first application and a second interface of another first application on a touchscreen; receiving a first notification message of a second application; determining a notification type of the first notification message based on the first interface of the first application and the second interface of the another application; and notifying the first notification message based on the determined notification type of the first notification message.

In this solution, in the case of split-screen display, the electronic device may determine a notification type of a notification message of the second application based on a plurality of interfaces of the first application displayed in the foreground, so as not to interfere with, as much as possible, normal running of the first application displayed in the foreground.

According to another aspect, a technical solution of this application provides an electronic device, including: a display unit, configured to display a first interface of a first application on a touchscreen; a receiving unit, configured to receive a first notification message of a second application; a determining unit, configured to determine a first target notification type of the first notification message based on the first interface; and a processing unit, configured to process the first notification message based on the first target notification type. The display unit is further configured to display a second interface of the first application on the touchscreen. The receiving unit is further configured to receive a second notification message of the second application. The determining unit is further configured to determine a second target notification type of the second notification message based on the second interface. The processing unit is further configured to process the second notification message based on the second target notification type. The first target notification type is different from the second target notification type.

In a possible implementation, different interfaces of the first application separately correspond to first notification types. A first notification type corresponding to the first interface is the first target notification type, and a first notification type corresponding to the second interface is the second target notification type.

In another possible implementation, different interfaces of the first application separately correspond to first notification types, and the second application corresponds to a second notification type. The determining unit is specifically configured to: determine a first intersection set of a first notification type corresponding to the first interface of the first application and the second notification type, where a notification type in the first intersection set is the first target notification type; and determine a second intersection set of a first notification type corresponding to the second interface of the first application and the second notification type, where a notification type in the second intersection set is the second target notification type.

The first notification type corresponding to the second interface is different from the first notification type corresponding to the first interface.

In another example, not covered by the invention, the determining unit is further configured to: after the display unit displays the second interface of the first application on the touchscreen, determine a third target notification type of the first notification message based on the first interface and the second interface. The processing unit is further configured to process the first notification message based on the third target notification type.

In another example, not covered by the invention, the determining unit is specifically configured to determine the third target notification type that is in notification types in the second intersection set and that is not executed for the first notification message when the electronic device displays the first interface. The second intersection set is an intersection set of the first notification type corresponding to the second interface of the first application and the second notification type.

In another example, not covered by the invention, the determining unit is further configured to: if a notification type used for the first notification message when the electronic device currently displays an interface of the first application does not entirely include the second notification type, determine a fourth target notification type of the first notification message after the display of the interface of the first application is stopped. The processing unit is further configured to process the first notification message based on the determined fourth target notification type.

In another possible implementation, the determining unit is specifically configured to determine the fourth target notification type that is in the second notification type and that is not executed for the first notification message when the electronic device currently displays the interface of the first application. According to another aspect, a technical solution of this application provides an electronic device, including: a display unit, configured to display a first interface of a first application on a touchscreen; a receiving unit, configured to receive a first notification message of a second application; a determining unit, configured to determine a first target notification type of the first notification message based on the first interface; and a processing unit, configured to process the first notification message based on the first target notification type.

According to another example, not covered by the invention, a technical solution of this application provides an electronic device, including: a display unit, configured to display a first interface of a first application and a second interface of another first application on a touchscreen; a receiving unit, configured to receive a first notification message of a second application; a determining unit, configured to determine a notification type of the first notification message based on the first interface of the first application and the second interface of the another application; and a processing unit, configured to notify the first notification message based on the determined notification type of the first notification message.

According to another example, not covered by the invention, a technical solution of this application provides an electronic device, including a touchscreen. The touchscreen includes a touch-sensitive surface and a display, one or more processors, a memory, a plurality of applications, and one or more computer programs. The one or more computer programs are stored in the memory, the one or more computer programs include an instruction, and when the instruction is executed by the electronic device, the electronic device is enabled to perform the following steps: displaying a first interface of a first application on the touchscreen, receiving a first notification message of a second application, determining a first target notification type of the first notification message based on the first interface, and processing the first notification message based on the first target notification type; and displaying a second interface of the first application on the touchscreen, receiving a second notification message of the second application, determining a second target notification type of the second notification message based on the second interface, and processing the second notification message based on the second target notification type, where the first target notification type is different from the second target notification type.

In a possible example, not covered by the invention, different interfaces of the first application separately correspond to first notification types. A first notification type corresponding to the first interface is the first target notification type, and a first notification type corresponding to the second interface is the second target notification type.

In another possible example, not covered by the invention, different interfaces of the first application separately correspond to first notification types, and the second application corresponds to a second notification type. When the instruction is executed by the electronic device, the electronic device is enabled to specifically perform the following steps: determining a first intersection set of a first notification type corresponding to the first interface of the first application and the second notification type, where a notification type in the first intersection set is the first target notification type; and determining a second intersection set of a first notification type corresponding to the second interface of the first application and the second notification type, where a notification type in the second intersection set is the second target notification type.

The first notification type corresponding to the first interface is different from the first notification type corresponding to the second interface.

In another possible example, not covered by the invention, when the instruction is executed by the electronic device, the electronic device is enabled to further perform the following steps: after the second interface of the first application is displayed on the touchscreen, determining a third target notification type of the first notification message based on the first interface and the second interface; and processing the first notification message based on the third target notification type.

In another possible example, not covered by the invention, when the instruction is executed by the electronic device, the electronic device is enabled to specifically perform the following step: determining the third target notification type that is in notification types in the second intersection set and that is not executed for the first notification message when the electronic device displays the first interface. The second intersection set is an intersection set of the first notification type corresponding to the second interface of the first application and the second notification type.

In another possible example, not covered by the invention, when the instruction is executed by the electronic device, the electronic device is enabled to further perform the following steps: if a notification type used for the first notification message when the electronic device currently displays an interface of the first application does not entirely include the second notification type, determining a fourth target notification type of the first notification message after the display of the interface of the first application is stopped; and processing the first notification message based on the determined fourth target notification type.

In another possible example, not covered by the invention, when the instruction is executed by the electronic device, the electronic device is enabled to specifically perform the following step: determining the fourth target notification type that is in the second notification type and that is not executed for the first notification message when the electronic device currently displays the interface of the first application. According to another aspect, a technical solution of this application provides an electronic device, including one or more processors and one or more memories. The one or more memories are coupled to the one or more processors, the one or more memories are configured to store computer program code, the computer program code includes a computer instruction, and when the one or more processors execute the computer instruction, the electronic device is enabled to perform the notification message processing method in any possible implementation of any one of the foregoing aspects.

According to another example, not covered by the invention, a technical solution of this application provides a computer storage medium, including a computer instruction. When the computer instruction runs on an electronic device, the electronic device is enabled to perform the notification message processing method in any possible implementation of any one of the foregoing aspects.

According to another aspect, not covered by the invention, a technical solution of this application provides a computer program product. When the computer program product runs on an electronic device, the electronic device is enabled to perform the notification message processing method in any possible design of any one of the foregoing aspects.

### BRIEF DESCRIPTION OF DRAWINGS

FIG. 1 is a schematic diagram of a hardware structure of an electronic device according to an embodiment of this application;
FIG. 2 is a schematic diagram of a software architecture of an electronic device according to an embodiment of this application;
FIG. 3 is a schematic diagram of an interface displayed by an electronic device according to an embodiment of this application;
FIG. 4 is a schematic diagram of another interface displayed by an electronic device according to an embodiment of this application;
FIG. 5a and FIG. 5b are schematic diagrams of a group of setting interfaces according to an embodiment of this application;
FIG. 6a and FIG. 6b are schematic diagrams of a group of interfaces displayed by an electronic device according to an embodiment of this application;
FIG. 7a and FIG. 7b are schematic diagrams of another group of interfaces displayed by an electronic device according to an embodiment of this application;
FIG. 8a and FIG. 8b are schematic diagrams of another group of setting interfaces according to an embodiment of this application;
FIG. 9a and FIG. 9b are schematic diagrams of another group of setting interfaces according to an embodiment of this application;
FIG. 10a to FIG. 10d are schematic diagrams of a series of interfaces displayed by an electronic device according to an embodiment of this application;
FIG. 11a and FIG. 11b are schematic diagrams of another group of interfaces displayed by an electronic device according to an embodiment of this application;
FIG. 12 is a schematic diagram of another interface displayed by an electronic device according to an embodiment of this application;
FIG. 13a to FIG. 13e are schematic diagrams of another group of interfaces displayed by an electronic device according to an embodiment of this application;
FIG. 14 to FIG. 19 are schematic diagrams of a series of interfaces displayed by an electronic device according to an embodiment of this application;
FIG. 20 to FIG. 23 are flowcharts of a series of notification message processing methods according to an embodiment of this application; and
FIG. 24 and FIG. 25 are two schematic structural diagrams of an electronic device according to an embodiment of this application.

### DESCRIPTION OF EMBODIMENTS

The following describes the technical solutions in the embodiments with reference to the accompanying drawings in the embodiments. In description of the embodiments, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of this embodiment, "a plurality of means two or more than two.

The following terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of this embodiment, unless otherwise stated, "a plurality of" means two or more than two.

A notification message processing method provided in the embodiments of this application may be applied to any electronic device that can display an interface, such as a mobile phone, a tablet computer, a wearable device, a vehicle-mounted device, an augmented reality (AR)/virtual reality (VR) device, a notebook computer, an ultra-mobile personal computer (UMPC), a netbook, or a personal digital assistant (PDA). A specific type of the electronic device is not limited in the embodiments of this application.

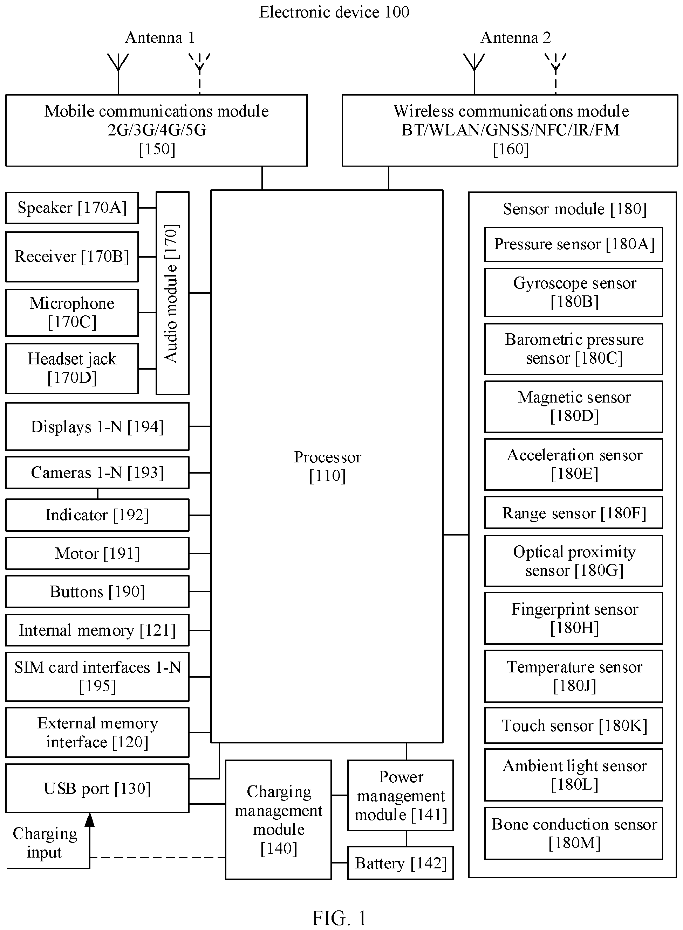

For example, FIG. 1 is a schematic structural diagram of an electronic device 100. The electronic device 100 may include a processor 110, an external memory interface 120, an internal memory 121, a universal serial bus (USB) port 130, a charging management module 130, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, buttons 190, a motor 191, an indicator 192, a camera 193, a display 194, a subscriber identification module (SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in the embodiments does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (AP), a modem processor, a graphics processing unit (GPU), an image signal processor (ISP), a controller, a memory, a video codec, a digital signal processor (DSP), a baseband processor, and/or a neural processing unit (NPU). Different processing units may be separate devices, or may be integrated into one or more processors.

The controller may be a nerve center and a command center of the electronic device 100. The controller may generate an operation control signal based on an instruction operation code and a time sequence signal, to control to read an instruction and execute an instruction.

A memory may further be disposed in the processor 110, and is configured to store an instruction and data. In some embodiments, the memory in the processor 110 is a cache memory. The memory may store an instruction or data that has just been used or is cyclically used by the processor 110. If the processor 110 needs to use the instruction or the data again, the processor 110 may directly invoke the instruction or the data from the memory, to avoid repeated access. This reduces a waiting time of the processor 110, and improves system efficiency.

In some embodiments, the processor 110 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (mobile industry processor interface, MIPI), a general-purpose input/output (GPIO) interface, a subscriber identity module (SIM) interface, a universal serial bus (USB) interface, and/or the like.

The I2C interface is a two-way synchronization serial bus, and includes a serial data line (SDA) and a serial clock line (SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communications module 160 through the PCM bus interface. In some embodiments, the audio module 170 may alternatively transfer an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is used for asynchronous communication. The bus may be a two-way communications bus, and converts to-be-transmitted data between serial communication and parallel communication. In some embodiments, the UART interface is usually configured to connect the processor 110 and the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 by using the UART interface, to implement a function of playing music through a Bluetooth headset.

The MIPI interface may be configured to connect the processor 110 and a peripheral device such as the display 194 or the camera 193. The MIPI interface includes a camera serial interface (CSI), a display serial interface (DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB port 130 is a port that conforms to a USB standard specification, and may be specifically a mini USB port, a micro USB port, a USB Type C port, or the like. The USB port 130 may be configured to connect to the charger to charge the electronic device 100, or may be configured to transmit data between the electronic device 100 and a peripheral device, or may be configured to connect to a headset to play audio through the headset, or may be configured to connect to another electronic device such as an AR device.

It may be understood that an interface connection relationship between the modules shown in the embodiments of the present invention is merely used as an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 130 is configured to receive a charging input from the charger. The charger may be a wireless charger or a wired charger. In some embodiments in which wired charging is used, the charging management module 130 may receive a charging input from the wired charger through the USB port 130. In some embodiments in which wireless charging is used, the charging management module 130 may receive a wireless charging input through a wireless charging coil of the electronic device 100. The charging management module 130 may further supply power to the electronic device through the power management module 141 when the battery 142 is charged.

The power management module 141 is configured to connect the battery 142 and the charging management module 130 to the processor 110. The power management module 141 receives an input of the battery 142 and/or the charging management module 130, and supplies power to the processor 110, the internal memory 121, an external memory, the display 194, the camera 193, the wireless communications module 160, and the like. The power management module 141 may further be configured to monitor parameters such as battery power, a battery cycle count, and a battery health status (electric leakage or impedance). In some other embodiments, the power management module 141 may be alternatively disposed in the processor 110. In some other embodiments, the power management module 141 and the charging management module 130 may alternatively be disposed in a same device.

A wireless communication function of the electronic device 100 may be implemented by the antenna 1, the antenna 2, the mobile communications module 150, the wireless communications module 160, the modem processor, the baseband processor, and the like.

The antenna 1 and the antenna 2 each are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, an antenna may be used in combination with a tuning switch.

The mobile communications module 150 may provide a wireless communication solution, for example, including 2G/3G/4G/5G wireless communication, that is applied to the electronic device 100. The mobile communications module 150 may include at least one filter, a switch, a power amplifier, a low noise amplifier (LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some functional modules of the mobile communications module 150 may be disposed in the processor 110. In some embodiments, at least some function modules in the mobile communications module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transferred to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communications module 150 or another function module.

The wireless communications module 160 may provide a wireless communication solution, for example, including a wireless local area network (WLAN) (for example, a wireless fidelity (Wi-Fi) network), Bluetooth (BT), a global navigational satellite system (GNSS), frequency modulation (FM), a near field communication (NFC) technology, or an infrared (IR) technology that is applied to the electronic device 100. The wireless communications module 160 may be one or more devices that integrate at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (GSM), a general packet radio service (general packet radio service, GPRS), code division multiple access (CDMA), wideband code division multiple access (WCDMA), time-division code division multiple access (TD-SCDMA), long term evolution (LTE), BT, a GNSS, a WLAN, NFC, FM, an IR technology, and/or the like. The GNSS may include a global positioning system (GPS), a global navigation satellite system (GLONASS), a BeiDou navigation satellite system (BDS), a quasi-zenith satellite system (quasi-zenith satellite system, QZSS), and/or a satellite-based augmentation system (SBAS).

The electronic device 100 implements the display function through the GPU, the display 194, the application processor, and the like. The GPU is a microprocessor for image processing, and is connected to the display 194 and the application processor. The GPU is configured to perform mathematical and geometric calculation, and perform graphics rendering. The processor 110 may include one or more GPUs that execute a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (AMOLED), a flexible light-emitting diode (FLED), mini-LED, a micro-LED, a micro-OLED, a quantum dot light-emitting diode (QLED), or the like. In some embodiments, the electronic device 100 may include one or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens. The photosensitive element of the camera converts an optical signal into an electrical signal, and transmits the electrical signal to the ISP for processing. The ISP converts the electrical signal into an image that is perceptible to the eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (CCD) or a complementary metal-oxide-semiconductor (CMOS) photoelectric transistor. The photosensitive element converts an optical signal into an electrical signal, and then transmits the electrical signal to the ISP. The ISP converts the electrical signal into a digital image signal, and outputs the digital image signal to the DSP for processing. The DSP converts the digital image signal into a standard image signal in an RGB format, a YUV format, or the like. In some embodiments, the electronic device 100 may include one or N cameras 193, where N is a positive integer greater than 1.

The digital signal processor is configured to process a digital signal. In addition to processing the digital image signal, the digital signal processor may further process another digital signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, MPEG (moving picture experts group)-1, MPEG-2, MPEG-3, and MPEG-4.

The NPU is a neural-network (NN) computing processor. The NPU quickly processes input information by referring to a biological neural network structure, for example, by referring to a mode of transfer between human brain neurons, and may further continuously perform self-learning. The electronic device 100 may implement intelligent cognition such as image recognition, facial recognition, speech recognition, and text understanding through the NPU.

The external memory interface 120 may be configured to connect to an external memory card such as a micro SD card, to extend a storage capability of the electronic device 100. The external memory card communicates with the processor 110 through the external memory interface 120, to implement a data storage function, for example, to store files such as music and a video in the external memory card.

The internal memory 121 may be configured to store computer-executable program code, and the executable program code includes an instruction. The processor 110 runs the instruction stored in the internal memory 121, to implement various function applications and data processing of the electronic device 100. The internal memory 121 may include a program storage area and a data storage area. The program storage area may store an operating system, an application program required by at least one function (for example, a sound play function or an image play function), and the like. The data storage area may store data (for example, audio data and an address book) created in a process of using the electronic device 100, and the like. In addition, the internal memory 121 may include a highspeed random access memory, or may include a nonvolatile memory, for example, at least one magnetic disk storage device, a flash memory device, or a universal flash storage (UFS).

The electronic device 100 may implement audio functions such as music playback and recording functions through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to perform audio signal encoding and decoding. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The electronic device 100 may be used to listen to music or answer a hands-free call by using the speaker 170A.

The receiver 170B, also referred to as an "earpiece", is configured to convert an audio electrical signal into a sound signal. When the electronic device 100 is used to answer a call or listen to voice information, the receiver 170B may be placed near a human ear to listen to a voice.

The microphone 170C, also referred to as a "mike" or a "microphone", is configured to convert a sound signal into an electrical signal. When making a call or sending a voice message, a user may make a sound near the microphone 170C, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce a noise, identify a sound source, implement a directional recording function, and the like.

The headset jack 170D is configured to connect to a wired headset. The headset jack 170D may be the USB port 130, or may be a 3.5 mm open mobile electronic device platform (OMTP) standard interface or a cellular telecommunications industry association of the USA (CTIA) standard interface.

The pressure sensor 180A is configured to sense a pressure signal, and may convert the pressure signal into an electrical signal. In some embodiments, the pressure sensor 180A may be disposed in the display 194. There are many types of pressure sensors 180A such as a resistive pressure sensor, an inductive pressure sensor, and a capacitive pressure sensor. The capacitive pressure sensor may include at least two parallel plates made of conductive materials. Capacitance between electrodes changes when force is applied to the pressure sensor 180A. The electronic device 100 determines a pressure strength based on a capacitance change. When a touch operation is performed on the display 194, the electronic device 100 detects a strength of the touch operation through the pressure sensor 180A. The electronic device 100 may also calculate a touch position based on a detection signal of the pressure sensor 180A. In some embodiments, touch operations that are performed at a same touch position but have different touch operation strengths may correspond to different operation instructions. For example, when a touch operation whose touch operation strength is less than a first pressure threshold is performed on an icon of Messages, an instruction for viewing an SMS message is executed. When a touch operation whose touch operation strength is greater than or equal to the first pressure threshold is performed on the icon of Messages, an instruction for creating a new SMS message is executed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be used for image stabilization during photographing. For example, when the shutter is pressed, the gyroscope sensor 180B detects an angle at which the electronic device 100 jitters, calculates, based on the angle, a distance for which a lens module needs to compensate, and allows the lens to eliminate the jitter of the electronic device 100 through a reverse motion, to implement image stabilization. The gyroscope sensor 180B may be further used in a navigation scenario and a somatic game scenario.

The barometric pressure sensor 180C is configured to measure barometric pressure. In some embodiments, the electronic device 100 calculates an altitude based on an atmospheric pressure value obtained by the barometric pressure sensor 180C through measurement, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover through the magnetic sensor 180D, to set a feature such as automatic unlocking through flipping based on a detected opening or closing state of the flip cover or a detected opening or closing state of the flip cover.

The acceleration sensor 180E may detect magnitude of accelerations in various directions (usually on three axes) of the electronic device 100, and may detect magnitude and a direction of the gravity when the electronic device 100 is still. The acceleration sensor 180E may be further configured to identify a posture of the electronic device, and is applied to applications such as a pedometer and switching between a landscape mode and a portrait mode.

The range sensor 180F is configured to measure a distance. The electronic device 100 may measure a distance in an infrared manner or a laser manner. In some embodiments, in a photographing scenario, the electronic device 100 may measure a distance through the range sensor 180F to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light through the light-emitting diode. The electronic device 100 detects infrared reflected light from a nearby object through the photodiode. When detecting sufficient reflected light, the electronic device 100 may determine that there is an object near the electronic device 100; or when detecting insufficient reflected light, the electronic device 100 may determine that there is no object near the electronic device 100. The electronic device 100 may detect, through the optical proximity sensor 180G, that the user holds the electronic device 100 close to the ear to make a call. In this case, the electronic device 100 automatically turns off the screen for power saving. The optical proximity sensor 180G may also be used in a smart cover mode or a pocket mode to automatically perform screen unlocking or locking.

The ambient light sensor 180L is configured to sense ambient light luminance. The electronic device 100 may adaptively adjust luminance of the display 194 based on the sensed ambient light luminance. The ambient light sensor 180L may be further configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may implement fingerprint-based unlocking, application lock access, fingerprint-based photographing, fingerprint-based call answering, and the like by using a feature of the collected fingerprint.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 degrades performance of the processor nearby the temperature sensor 180J, to reduce power consumption for thermal protection. In some other embodiments, when the temperature is less than another threshold, the electronic device 100 heats the battery 142 to prevent the electronic device 100 from being abnormally powered off because of a low temperature. In some other embodiments, when the temperature is less than still another threshold, the electronic device 100 boosts an output voltage of the battery 142 to prevent abnormal power-off caused by a low temperature.

The touch sensor 180K is also referred to as a "touch panel". The touch sensor 180K may be disposed on the display 194. The touch sensor 180K and the display 194 form a touchscreen, which is also referred to as a "touchscreen". The touch sensor 180K is configured to detect a touch operation acting on or near the touch sensor 180K. The touch sensor may transfer the detected touch operation to the application processor, to determine a type of a touch event. The display 194 provides a visual output related to the touch operation. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also contact a body pulse to receive a blood pressure beating signal. In some embodiments, the bone conduction sensor 180M may alternatively be disposed in a headset, to constitute a bone conduction headset. The audio module 170 may obtain a speech signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The buttons 190 include a power button, a volume button, and the like. The buttons 190 may be mechanical buttons, or may be touch buttons. The electronic device 100 may receive a button input, and generate a button signal input related to a user setting and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. Touch operations performed on different areas on the display 194 may correspond to different vibration feedback effects of the motor 191. Different application scenarios (for example, a time reminder scenario, an information receiving scenario, an alarm clock scenario, and a game scenario) may also correspond to different vibration feedback effects. A touch vibration feedback effect may alternatively be customized.

The indicator 192 may be an indicator light, which may be used to indicate a charging status and a power change, or may be used to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into one SIM card interface 195. The plurality of cards may be in a same type or different types. The SIM card interface 195 may also be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a micro service architecture, or a cloud architecture. In the embodiments, an Android system of the layered architecture is used as an example to describe a software structure of the electronic device 100.

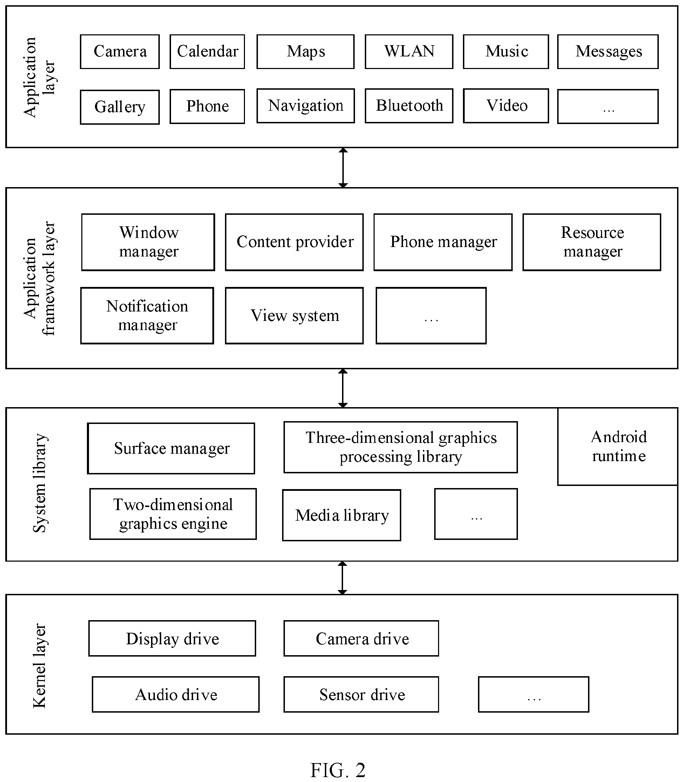

FIG. 2 is a block diagram of a software structure of the electronic device 100 according to an embodiment of the present invention. In the layered architecture, software is divided into several layers, and each layer has a clear role and task. The layers communicate with each other through software interfaces. In some embodiments, an Android system is divided into four layers: an application layer, an application framework layer, an Android runtime and a system library, and a kernel layer from top to bottom. The application layer may include a series of application packages.

As shown in FIG. 2, the application package may include applications such as Camera, Gallery, Calendar, Phone, Maps, Navigation, WLAN, Bluetooth, Music, Videos, and Messages.

The application framework layer provides an application programming interface (API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to store and obtain data, and enable the data to be accessed by an application. The data may include a video, an image, an audio, calls that are made and received, a browsing history and bookmarks, an address book, and the like.

The view system includes visual controls such as a control for displaying a text and a control for displaying a picture, and the view system may be configured to construct an application. A display interface may include one or more views. For example, a display interface including a Messages notification icon may include a text display view and an image display view.

The phone manager is configured to provide a communication function of the electronic device 100, for example, management of a call status (including answering or declining).

The resource manager provides various resources such as a localized character string, an icon, a picture, a layout file, and a video file for an application.

The notification manager enables an application to display notification information in a status bar, and may be configured to convey a notification-type message. The notification-type message may automatically disappear after the message is displayed for a short period of time without user interaction. For example, the notification manager is configured to provide a notification of download completion, a message reminder, and the like. The notification manager may alternatively be a notification that appears on the top of a status bar of a system in the form of a graph or a scroll bar text, for example, a notification of an application running in the background or a notification that appears on the screen in the form of a dialog window. For example, text information is prompted in the status bar, an alert sound is produced, the electronic device vibrates, or the indicator light blinks.

The Android runtime includes a kernel library and a virtual machine, and the Android runtime is responsible for scheduling and management of the Android system.

The kernel library includes two parts: a function that needs to be invoked by a Java language and a kernel library of Android.

The application layer and the application framework layer run on the virtual machine. The virtual machine executes a Java file at the application layer and the application framework layer as a binary file. The virtual machine is configured to perform functions such as object lifecycle management, stack management, thread management, security and exception management, and garbage collection.

The system library may include a plurality of functional modules, for example, a surface manager, a media library (Media Libraries), a three-dimensional graphics processing library (for example, OpenGL ES), and a 2D graphics engine (for example, SGL).

The surface manager is configured to manage a display subsystem and provide fusion of 2D and 3D image layers for a plurality of applications.

The media library supports playback and recording of a plurality of commonly used audio and video formats, static image files, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to a notification message processing scenario, Android is used as an example to describe working procedures of software and hardware of the electronic device 100 herein.

When a software provider needs to send a notification message to a user, a server of the software provider sends the notification message and an identifier of a to-be-notified electronic device of the user to an Android notification server (the notification server is provided by Google or a vendor of the electronic device). The notification server sends the notification message to the to-be-notified electronic device. Based on a current setting of the electronic device, the notification manager of the electronic device performs display notification on the notification message by using the display 194, performs sound notification on the notification message by using the speaker 170A in the audio module 170, or performs vibration prompting on the notification message by using the motor 191, or the like.

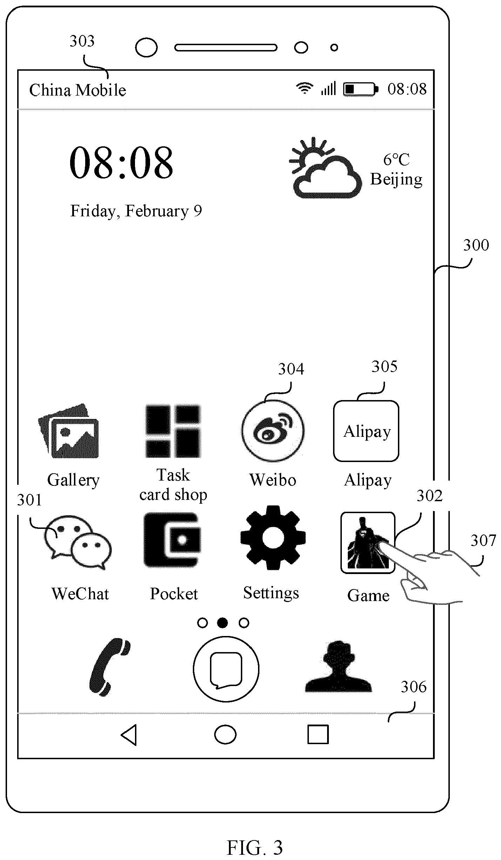

For example, FIG. 3 shows an interface 300 displayed on the touchscreen of the electronic device 100 having the hardware structure shown in FIG. 1 and the software structure shown in FIG. 2. The touchscreen may include the display 194 and the touch panel. The interface is used to display a control. The control is a graphical user interface (graphical user interface, GUI) element, and is also a software component. The control is included in software, and controls data processed by the software and an interactive operation on the data. The user may interact with the control through direct manipulation (direct manipulation), to read or edit information about the software. Generally, the control may include visual interface elements such as an icon, a button, a menu, a tab, a text box, a dialog box, a status bar, a navigation bar, and a widget.

As shown in FIG. 3, the interface 300 may include a status bar 303, a hidden navigation bar 306, a time and weather widget, and icons of a plurality of applications (application, App), such as a microblog icon 304, an Alipay icon 305, a camera icon 302, and a WeChat icon 301. The status bar 303 may include a name of an operator (for example, China Mobile), time, a Wi-Fi icon, signal strength, and a current battery level. The navigation bar 306 may include a back (back) key icon, a home screen key icon, a forward key icon, and the like. In addition, it may be understood that, in some other embodiments, the status bar 303 may further include a Bluetooth icon, a mobile network (for example, 4G), an alarm clock icon, an externally-connected device icon, and the like. It may be further understood that, in some other embodiments, the interface 300 may further include a Dock bar, and the Dock bar may include icons of commonly used applications and the like.

In some other embodiments, the electronic device 100 may further include a home screen key. The home screen key is used to return a GUI displayed on the touchscreen to a home screen based on an operation of the user. In some other embodiments, a fingerprint sensor may be further integrated into the home screen key. In this way, when the user presses the home screen key, the electronic device may perform fingerprint collection accordingly, to further confirm an identity of the user.

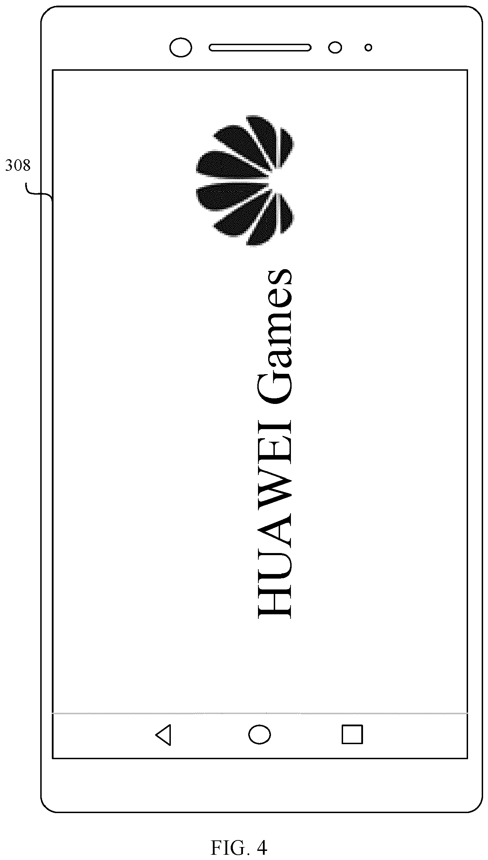

After the electronic device 100 detects a touch operation performed by a finger (or a stylus or the like) of the user on an icon of an application on the interface 300, the electronic device may open an application interface corresponding to the icon of the application in response to the touch operation, so that the application is run in the foreground, and the application is displayed on the touchscreen. For example, after the electronic device detects an operation that the finger of the user touches a game icon 302 in FIG. 3, referring to FIG. 4, the electronic device runs a game application in the foreground and displays a game interface 308 in response to an operation that a finger 307 of the user touches the game icon 302.

The following describes in detail solutions provided in the following embodiments by using an example in which the mobile phone having the structures shown in FIG. 1 and FIG. 2 is the electronic device 100.

When the electronic device is running an application in the foreground, if the foreground application (an application currently displayed on the touchscreen of the electronic device) or another application on the electronic device generates a notification message, the electronic device needs to process the notification message. The notification message is an object that can be understood and known by a person skilled in the art. For example, in an Android system, the notification message may include an icon, a title, a detailed text, and a notification operation. Generally, the electronic device may perform the following processing on the notification message. For example, the notification message is displayed on a status bar or a notification bar, or the notification message is displayed above the touchscreen in a form of a floating notification. For another example, the notification message is presented by using a sound prompt or a vibration prompt. For another example, the notification message is presented by using a pop-up prompt box. For another example, the notification message is not prompted or displayed. Applications in the electronic device may include a system native application and an application developed by a third party.

An embodiment provides a notification message processing method. When an electronic device receives (or detects) a notification message, the electronic device may process the notification message based on an application displayed on a touchscreen, so as not to interfere with normal running of the application as much as possible.

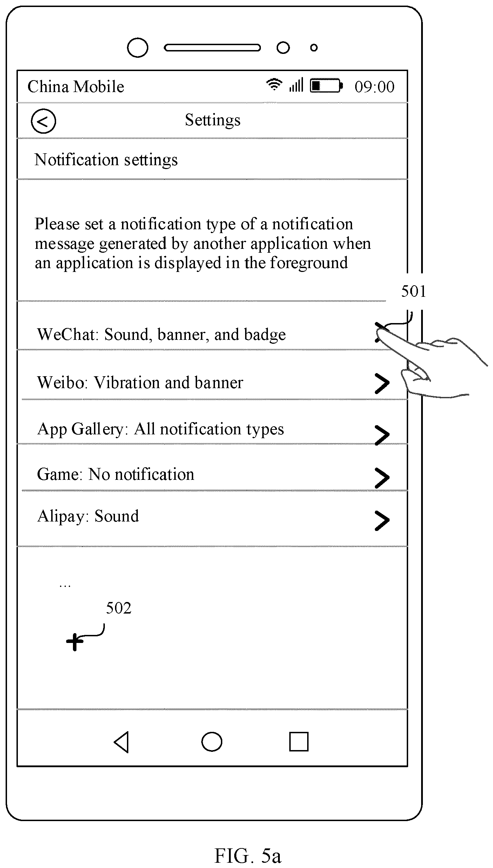

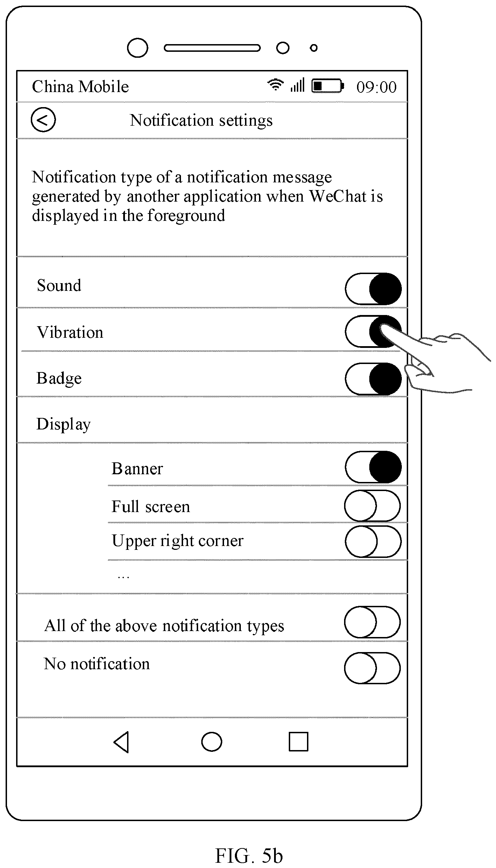

In some embodiments, each application on the electronic device may correspond to a first notification type. The first notification type may be a notification type that may be used by the electronic device for the generated notification message when the application is displayed in the foreground. The notification message may be generated by the application displayed in the foreground, or may be generated by another application on the electronic device. The first notification type may include one or more of a display notification type, a sound notification type, a vibration notification type, a badge notification type, a notification type without notification, a notification type without banner, and a notification type without sound. The display notification type may include a banner display notification type, a pop-up window display notification type, a full-screen display notification type (for example, a notification type during an incoming call), a left-side display notification type, a right-side display notification type, and the like. The badge notification type is a mark for displaying a quantity of messages on a corner of an icon of the application. The badge notification type may be an application icon and mark displayed on an application interface (for example, an upper left corner or an upper right corner) of the application, or may be an application icon and a mark displayed on a desktop. The first notification type of the application may be preset by a developer of the application or is set by a system of the electronic device by default. Alternatively, referring to FIG. 5a and FIG. 5b, the first notification type of the application may be set by a user through a notification setting interface. As shown in FIG. 5a, the notification setting interface includes a setting control corresponding to the application. When the electronic device receives an operation that the user taps a setting control 501 corresponding to WeChat, a specific notification setting interface for WeChat shown in FIG. 5b may be displayed on the touchscreen. On the notification setting interface shown in FIG. 5b, the user may set or modify a notification type of the electronic device for a generated notification message when WeChat is displayed in the foreground. In addition, as shown in FIG. 5a, the notification setting interface may further include a control 502 used to add an application, so that the user adds and sets first notification types corresponding to more applications. When receiving a notification message generated by a second application, the electronic device may process the notification message by using a first notification type of a first application in the foreground. The second application may be the same as or different from the first application.

For example, the first notification type of the first application is a sound notification type. If the electronic device receives, when displaying the first application in the foreground, the notification message generated by the second application, the electronic device notifies the generated notification message by using the sound notification type in the first notification type instead of using a notification type (for example, a banner or a vibration) other than a sound.

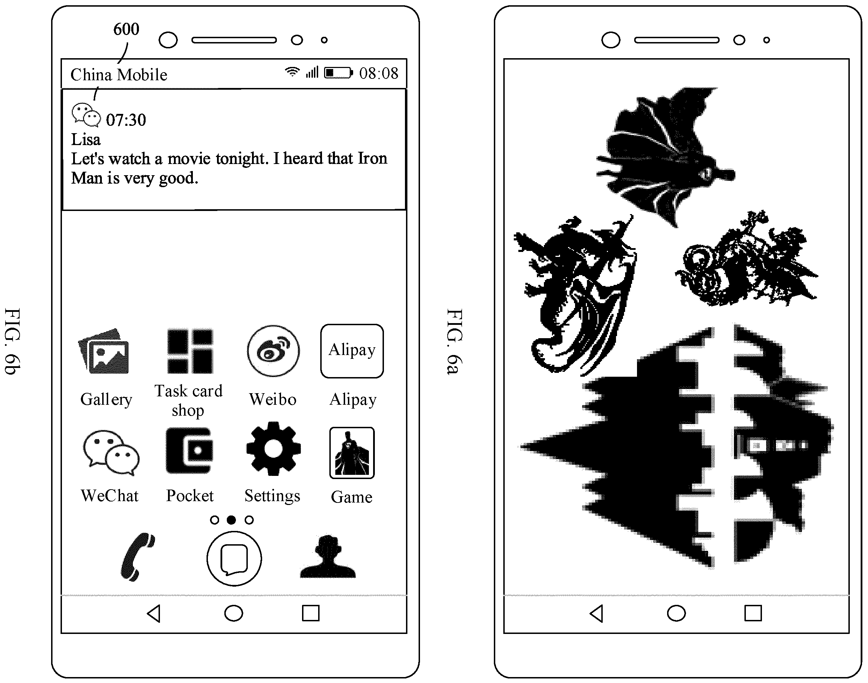

For example, the first application is a game application. Referring to FIG. 6a, if the electronic device receives a WeChat notification message in a process of displaying the game application in the foreground, the electronic device may notify the WeChat notification message by using the sound notification type. For example, the electronic device may emit a "beep" sound to prompt the user that the notification message is generated, or a voice notification "You have received a message", or a voice notification "Have received a WeChat notification message". In this embodiment, the application displayed in the foreground is an interface of the application displayed in the foreground.

For another example, the first notification type of the first application is a notification type without banner. If the electronic device receives a notification message when displaying the first application in the foreground, the electronic device does not process the generated notification message by using a banner notification type based on the first notification type of the first application, and may process the generated notification message by using a notification type (for example, a sound or a vibration) other than the banner notification type.

For example, the first application is a game application. If the electronic device receives a WeChat notification message when displaying the game application in the foreground, the electronic device may remind, by using a notification type such as a vibration or a sound, the user that the notification message is received, and does not process the notification message in a banner display manner.

For another example, the first notification type of the first application is no notification. If the electronic device receives a notification message when running the first application in the foreground, the electronic device does not notify the generated notification message based on the first notification type of the first application, or in other words, the electronic device blocks all notification messages.

For example, the first application is a game application. If the electronic device receives a WeChat notification message when running the game application in the foreground, the electronic device does not notify the WeChat notification message when the first application is a foreground application.

In some embodiments, after the electronic device exits the first application in the foreground, the electronic device may notify a non-notified notification message when the first application is a foreground application. That the electronic device exits the first application in the foreground may be that the electronic device returns to the desktop (for example, the user taps a home screen touch key), or that the electronic device returns to an application interface of another application (for example, the user taps a back key) that is used before the first application.

For example, if the first application is a game application, the first notification type of the first application is no notification, and the electronic device receives a WeChat notification message when displaying the game application in the foreground, referring to FIG. 6b, the electronic device may notify the WeChat notification message 600 after exiting the first application in the foreground.

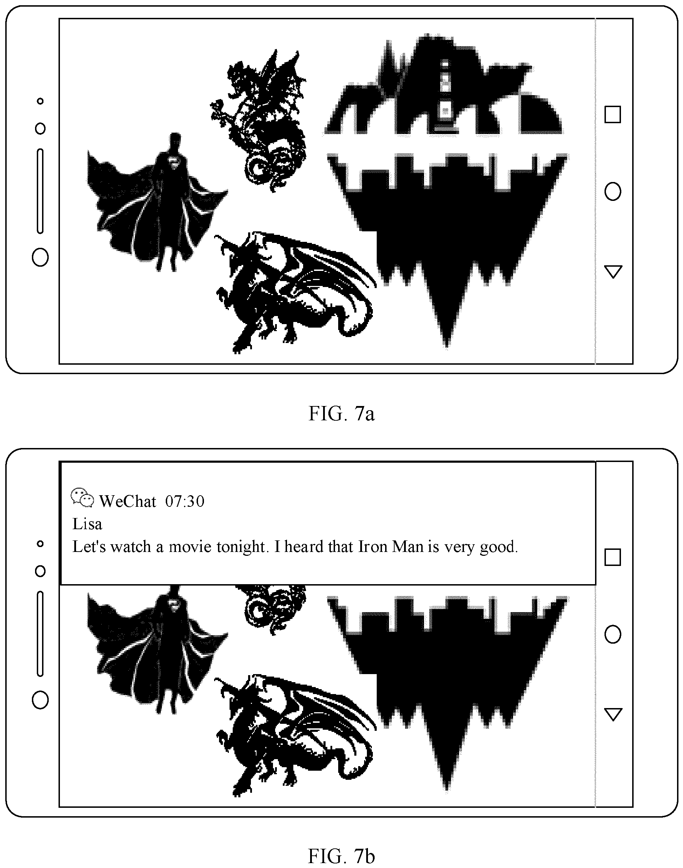

In some other embodiments, different applications on the electronic device may have different priorities. The electronic device may determine a notification type of a notification message based on the first notification type of the first application displayed in the foreground and a priority of the first application and a priority of the second application that generates the notification message. For example, when the first notification type of the first application is no notification, but the priority of the second application that generates the notification message is higher than the priority of the first application, the electronic device may notify, when displaying the first application in the foreground, the notification message generated by the second application. For example, referring to FIG. 7a and FIG. 7b, the first application is a game application, and the second application is WeChat. If the electronic device receives a WeChat notification message when displaying the game application in the foreground, and a priority of WeChat is higher than that of the game, the electronic device may notify the WeChat notification message 700. For another example, when the first notification type of the first application is no notification, and the priority of the second application is lower than or equal to the priority of the first application, the electronic device does not notify, when displaying the first application in the foreground, the notification message generated by the second application.

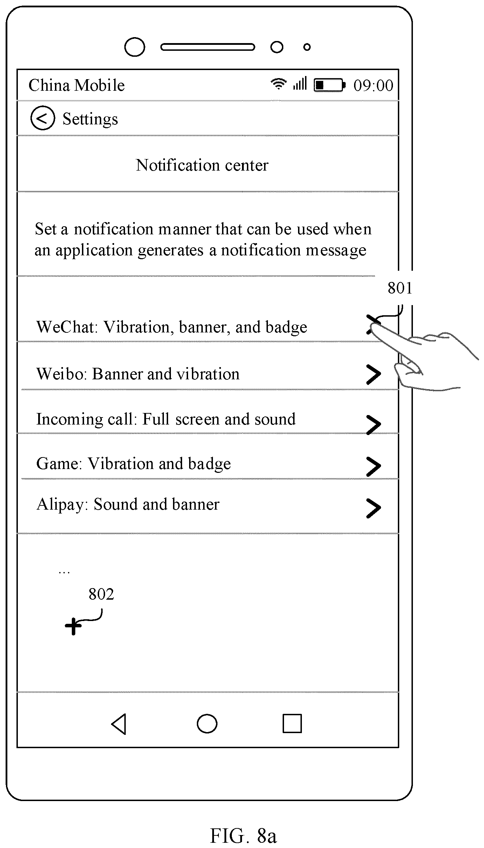

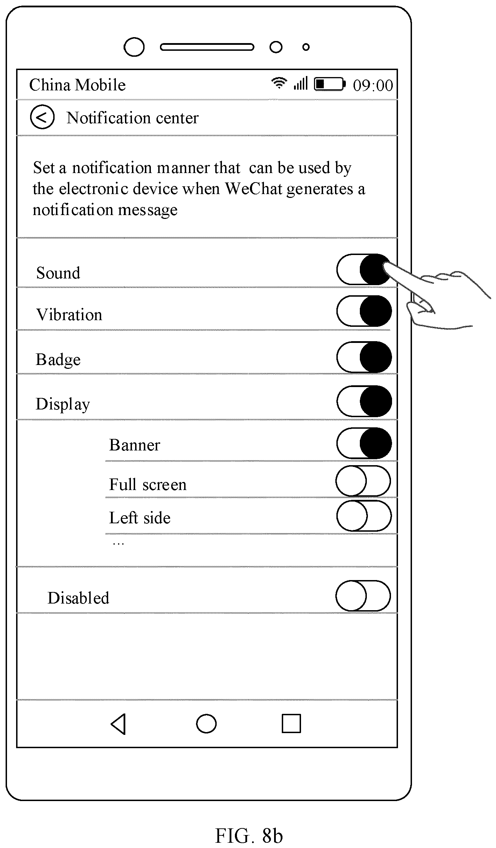

In addition, each application on the electronic device may further correspond to a second notification type. The second notification type is a notification type that may be used by the electronic device when the application generates a notification message. The second notification type may include one or more of a display notification type, a sound notification type, a vibration notification type, a badge notification type, or the like. The second notification type of the application may be preset by a developer of the application or is preset by a system of the electronic device. Alternatively, referring to FIG. 8a and FIG. 8b, the second notification type of the application may be a notification type set by the user in a notification center. As shown in FIG. 8a, an interface of the notification center includes a setting control 801. When the electronic device receives the setting control 801 corresponding to an operation that the user taps WeChat, the electronic device may display a setting interface shown in FIG. 8b. On the setting interface shown in FIG. 8b, the user may set or modify a notification type that may be used by the electronic device when WeChat generates a notification message. In addition, as shown in FIG. 8a, the notification setting interface may further include an addition control 802, so that the user adds and sets second notification types corresponding to more applications.

In some other embodiments, when the electronic device receives a notification message, the electronic device may determine a notification type of the notification message based on the first notification type of the first application in the foreground and the second notification type of the second application that generates the notification message.

For example, when the foreground application is the first application, and the electronic device receives the notification message generated by the second application, the electronic device may determine an intersection set of the second notification type of the second application and the first notification type of the first application. The intersection set may be referred to as a third notification type, and the notification message is processed by using the third notification type.

For example, referring to Table 1, the first notification type of the first application is a sound notification type, and the second notification type of the second application includes a sound notification type and a banner notification type. When the first application is displayed in the foreground and the electronic device receives the notification message generated by the second application, the electronic device may determine that the intersection set of the second notification type of the second application and the first notification type of the first application is the sound notification type, or in other words, the third notification type is the sound notification type. In this case, the electronic device may notify, by using the sound notification type, the notification message generated by the second application.

**Table 1**

| | | |
|---|---|---|
| First notification type of the first application | Second notification type of the second application | Notification type determined when the first application is displayed in the foreground |
| Sound notification type | Sound notification type and banner notification type | Sound notification type |

For another example, referring to Table 2, the first notification type of the first application is a sound notification type, and the second notification type of the second application includes a vibration notification type and a banner notification type. When the first application is displayed in the foreground and the electronic device receives the notification message generated by the second application, the electronic device may determine that the intersection set of the second notification type of the second application and the first notification type of the first application is empty. Therefore, the electronic device does not notify the notification message generated by the second application.

**Table 2**

| | | |
|---|---|---|
| First notification type of the first application | Second notification type of the second application | Notification type determined when the first application is displayed in the foreground |
| Sound notification type | Vibration notification type and banner notification type | No notification |

For another example, referring to Table 3, the first notification type of the first application includes a sound notification type and a banner notification type, and the second notification type of the second application includes a vibration notification type and a banner notification type. When the first application is displayed in the foreground and the electronic device receives the notification message generated by the second application, the electronic device may determine that the intersection set of the second notification type of the second application and the first notification type of the first application is the banner notification type. In this case, the electronic device may notify the notification message by using the banner notification type.

**Table 3**

| | | |
|---|---|---|
| First notification type of the first application | Second notification type of the second application | Notification type determined when the first application is displayed in the foreground |
| Sound notification type and banner notification type | Vibration notification type and banner notification type | Banner notification type |

For example, referring to FIG. 7a and FIG. 7b, when the first application is a game application and the second application is WeChat, after displaying the game application in the foreground and receiving a WeChat notification message, the electronic device may notify the WeChat notification message by using the banner notification type.

In addition, when an application on the electronic device corresponds to a first notification type and a second notification type, the first notification type of the application may be all notification types in one case.

For example, referring to Table 4, the first notification type of the first application is all notification types, and the second notification type of the second application includes a vibration notification type and a banner notification type. When the first application is a foreground application and the electronic device receives the notification message generated by the second application, the electronic device may determine that the intersection set of the second notification type of the second application and the first notification type of the first application is all notification types in the second notification type, to be specific, the vibration notification type and the banner notification. In this case, the electronic device notifies, by using the vibration notification type and the banner notification type, the notification message generated by the second application.

**Table 4**

| | | |
|---|---|---|
| First notification type of the first application | Second notification type of the second application | Notification type determined when the first application is displayed in the foreground |
| All notification types | Vibration notification type and banner notification type | Vibration notification type and banner notification type |

For another example, referring to Table 5, the first notification type of the first application is no notification, and the second notification type of the second application includes a vibration notification type and a banner notification type. When the first application is displayed in the foreground and the electronic device receives the notification message generated by the second application, the electronic device may determine that the intersection set of the second notification type of the second application and the first notification type of the first application is empty. Therefore, the electronic device does not notify the notification message generated by the second application.

**Table 5**

| | | |
|---|---|---|
| First notification type of the first application | Second notification type of the second application | Notification type determined when the first application is displayed in the foreground |
| No notification | Vibration notification type and banner notification type | No notification |

In some other embodiments, referring to Table 6, when an application on the electronic device has a priority, if the first notification type of the first application is no notification, and the priority of the second application that generates the notification message is higher than the priority of the first application, the electronic device processes, by using the second notification type of the second application when displaying the first application in the foreground, the notification message generated by the second application. For example, referring to FIG. 7a and FIG. 7b, the first application is a game, the second application is WeChat, and a second notification type of WeChat is a banner notification. If the electronic device receives a WeChat notification message when displaying the game application in the foreground, and a priority of WeChat is higher than that of the game, the electronic device may perform display notification on the WeChat notification message 700 by using the banner notification type in the second notification type of WeChat.

**Table 6**

| | | | |
|---|---|---|---|
| First notification type of the first application | Second notification type of the second application | Priority | Notification type determined when the first application is displayed in the foreground |
| No notification | Banner notification type | The second application is higher than the first application | Banner notification type |

In addition, if the first notification type of the first application is no notification, and the priority of the second application is lower than or equal to the priority of the first application, regardless of the second notification type of the second application, when displaying the first application in the foreground, the electronic device does not notify the notification message generated by the second application.

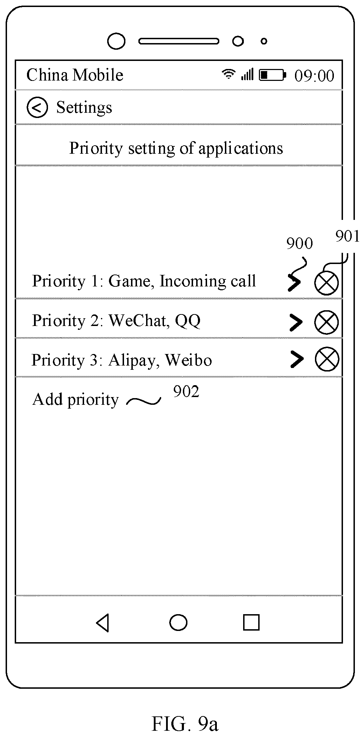

A priority of an application may be preset by the system, or may be set by the user by using a priority setting interface. Referring to FIG. 9a, the electronic device may set one or more applications corresponding to each priority. A setting interface shown in FIG. 9a may include a priority setting control 900 that is used to add or delete an application included in a priority corresponding to the setting control 900. The setting interface shown in FIG. 9a may further include a priority deletion control 901 that is used to delete a priority corresponding to the deletion control 901. The setting interface shown in FIG. 9a may further include a priority adding control 902 that is used to add a new priority.

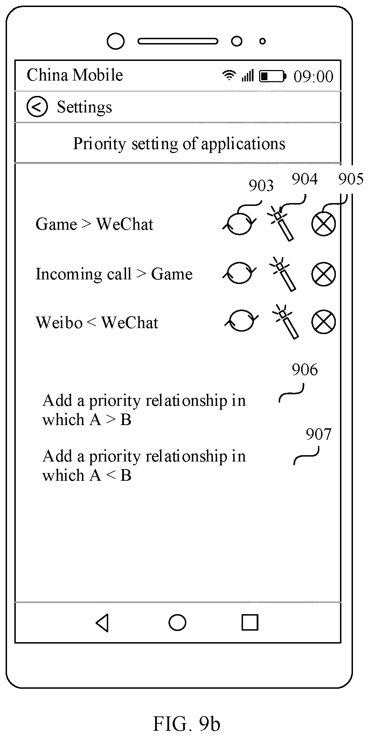

In some embodiments, referring to FIG. 9b, the electronic device may specify that a priority of an application is higher than that of another application, or specify that a priority of an application is lower than that of another application. A setting interface shown in FIG. 9b may include an exchange control, a modification control, and a deletion control. For example, in FIG. 9b, an exchange control 903 corresponding to a priority relationship in which "a game is higher than WeChat" may be used to exchange a priority of the game with a priority of WeChat, a modification control 904 corresponding to the priority relationship may be used to modify the priority relationship, for example, modify the priority relationship into "game and video applications are higher than WeChat", and a deletion control 905 corresponding to the priority relationship may be used to delete the priority relationship. In addition, as shown in FIG. 9b, the setting interface may include a control 906 and a control 907. The control 906 is used to add a priority relationship in which a priority of an application is higher than that of another application, and the control 907 is used to add a priority relationship in which a priority of an application is lower than that of another application.

In some embodiments, regardless of whether the first notification type of the first application includes all notification types in the second notification type of the second application, or in other words, regardless of whether the electronic device can process, by using all the notification types in the second notification type of the second application when displaying the first application in the foreground, a notification message 1 generated by the second application, the electronic device no longer processes the notification message 1 after exiting the first application in the foreground.

In some other embodiments, the first notification type of the first application does not include all notification types in the second notification type of the second application, or in other words, the electronic device does not process, by using all the notification types in the second notification type of the second application when displaying the first application in the foreground, a notification message 1 generated by the second application. After exiting the first application in the foreground, the electronic device may process the notification message 1 by using all notification types in a fourth notification type. The fourth notification type is a notification type other than the third notification type in the second notification type of the second application. That is, the fourth notification type is a notification type that is in the second notification type of the second application and that is not used for the notification message 1 when the electronic device displays the first application in the foreground. In other words, when displaying the first application in the foreground, the electronic device may cache the fourth notification type that is not executed in the second notification type of the second application, and process the fourth notification type after exiting the first application in the foreground. A notification type that has been executed when the first application is displayed in the foreground is no longer executed after the first application exits in the foreground. In this way, when displaying the first application in the foreground and after exiting the first application in the foreground, the electronic device may process, by using the entire second notification type of the second application, the notification message 1 generated by the second application when the first application is displayed in the foreground.

For example, referring to the foregoing Table 3 and FIG. 6a and FIG. 6b, the first application is a game, and the second application is WeChat. When displaying the game application in the foreground, the electronic device notifies a generated WeChat notification message 1 only by using a banner notification type (the third notification type), and does not notify the WeChat notification message 1 by using a vibration notification type (the fourth notification type) in a second notification type of WeChat. After exiting the game, the electronic device may notify the WeChat notification message 1 by using the vibration notification type.

For another example, referring to Table 7, the first notification type of the first application includes a sound notification type and a badge notification type, and the second notification type of the second application includes a vibration notification type, a banner notification type, and a badge notification type. When the first application is a game, and the second application is WeChat, after displaying the game in the foreground and receiving a WeChat notification message, the electronic device notifies the WeChat notification message only by using a badge notification type, and does not notify the WeChat notification message by using a vibration notification type and a banner notification type in a second notification type of WeChat. After exiting the game, the electronic device may notify the WeChat notification message by using the banner notification type and the vibration notification type in the second notification type of WeChat. The banner notification type and the vibration notification type are the fourth notification type.

**Table 7**

| | | | |
|---|---|---|---|
| First notification type of the first application | Second notification type of the second application | Notification type determined when the first application is displayed in the foreground | Notification type determined after the first application exits in the foreground |
| Sound notification type and badge notification type | Vibration notification type, banner notification type, and badge notification type | Badge notification type | Vibration notification type and banner notification type |

In some other embodiments, if the first notification type of the first application does not include all notification types in the second notification type of the second application, after exiting the first application in the foreground, the electronic device may process, by using all the notification types in the second notification type of the second application, the notification message generated by the second application when the first application is displayed in the foreground.

For example, referring to the foregoing Table 3 and FIG. 6a and FIG. 6b, the first application is a game, and the second application is WeChat. When displaying the game in the foreground, the electronic device notifies a generated WeChat notification message only by using a banner notification type, and does not notify the WeChat notification message by using a vibration notification type in a second notification type of WeChat. After exiting the game, the electronic device may notify the WeChat notification message by using the vibration notification type and the banner notification type in the second notification type of WeChat.

In some other embodiments, if the first notification type does not include all notification types in the second notification type of the second application, after the electronic device exits the first application in the foreground, the electronic device may notify, by using preset notification types, a notification message generated by the second application when the foreground application is the first application.

For example, referring to the foregoing Table 3, the first application is a game application, the second application is WeChat, and the preset notification types are a sound notification type, a vibration notification type, and a badge notification type. After receiving a WeChat notification message when the electronic device displays the game application in the foreground, the electronic device notifies the generated WeChat notification message only by using a banner notification type, and does not notify the WeChat notification message by using a vibration notification type in a second notification type of WeChat. After exiting the game, the electronic device may notify the WeChat notification message by using the badge notification type, the sound notification type, and the vibration notification type in the preset notification types.

In some other embodiments, the first notification type of the first application includes a correspondence between a type of a notification message and a specific notification type, and different message types may correspond to different notification types. For example, a notification type corresponding to a text message type includes a sound and a banner, and a notification type corresponding to a picture message type (a message type including an icon) includes a sound and a vibration. When the electronic device receives the notification message generated by the second application, the electronic device may determine the notification type of the notification message based on a notification type corresponding to the notification message of the type in the first notification type of the first application in the foreground and the second notification type of the second application that generates the notification message.

In some other embodiments, a first notification type corresponding to an application on the electronic device is related to time, and first notification types corresponding to a same application in different time periods may be different. When the first application is displayed in the foreground, the electronic device may determine the notification type of the notification message based on a first notification type corresponding to the first application in a current time period and the second notification type of the second application that generates the notification message. For example, a first notification type corresponding to the first application in a time period of 22:00-06:00 per day is no notification. When the first application is a foreground application in this time period, the electronic device does not notify the notification message generated by the second application. For another example, a first notification type corresponding to the first application in a time period of 06:00-22:00 per day includes a sound notification type and a banner notification type. When the first application is displayed in the foreground in this time period, the electronic device notifies, by using the sound notification type and the banner notification type, the notification message generated by the second application.

Generally, an application on the electronic device is a relatively large program, and may include a plurality of code segments. Each code segment may be a part of code in the large application, and includes one or more statement blocks that are used to complete a task. Different division manners indicate different types and quantities of code segments obtained through division of each application. A game application is used as an example. In a division manner, the game application may include a loading code segment, a running code segment, an exit code segment, and the like. In another division manner, the game application may include a combat code segment, a shopping code segment, a role setting program, a task setting program, a game setting code segment, and the like.

In some embodiments, different from each application corresponding to a group of first notification types, each code segment of the application may correspond to a group of first notification types. In some solutions, when the electronic device runs a code segment of the first application in the foreground, if a notification message is received, the electronic device processes the notification message by using a first notification type corresponding to the currently running code segment.

In some other solutions, when receiving the notification message, the electronic device may determine, based on the first notification type corresponding to the currently running code segment of the first application in the foreground and the second notification type of the second application that generates the notification message, a notification type used for the notification message. In other words, the electronic device may determine, based on a current running status and a running situation of the first application in the foreground and the second notification type of the second application that generates the notification message, the notification type used for the notification message.

Specifically, when the first application is displayed in the foreground, a code segment 1 of the first application is currently running, and the electronic device receives a notification message 1 generated by the second application, the electronic device may determine an intersection set of the second notification type of the second application and a first notification type corresponding to the code segment 1 of the first application, where the intersection set may be referred to as a third notification type corresponding to the code segment 1; and process the notification message 1 by using the third notification type. When a code segment 2 of the first application is currently running, and the electronic device receives a notification message 2 generated by the second application, the electronic device may determine an intersection set (a third notification type corresponding to the code segment 2) of the second notification type of the second application and a first notification type corresponding to the code segment 2 of the first application, and process the notification message 2 by using a notification type in the intersection set.

In some other embodiments, a process in which the electronic device runs the first application may include a plurality of interfaces (or screens), and different interfaces may correspond to different first notification types. For example, when the first application is a game application, the running process of the first application may include a loading interface, a combat interface, and a shopping interface. In some solutions, when the electronic device displays an interface of the first application in the foreground, if a notification message is received, the electronic device processes the notification message by using a first notification type corresponding to the currently displayed interface.

In some other solutions, when the electronic device receives the notification message, the electronic device may determine, based on a first notification type corresponding to the currently displayed interface of the first application in the foreground and the second notification type of the second application that generates the notification message, a notification type used for the notification message. In other words, the electronic device may determine, based on currently displayed content and a running situation of the first application in the foreground and the second notification type of the second application that generates the notification message, the notification type used for the notification message.

Specifically, when the first application is displayed in the foreground, an interface 1 of the first application is currently being displayed, and the electronic device receives a notification message 1 generated by the second application, the electronic device may determine an intersection set of the second notification type of the second application and a first notification type corresponding to the interface 1 of the first application, where the intersection set may be referred to as a third notification type corresponding to the interface 1; and process the notification message 1 by using the third notification type. When an interface 2 of the first application is currently being displayed, and the electronic device receives a notification message 2 generated by the second application, the electronic device may determine an intersection set (a third notification type corresponding to the interface 2) of the second notification type of the second application and a first notification type corresponding to the interface 2 of the first application, and process the notification message 2 by using a notification type in the intersection set.

In some other embodiments, a process in which the electronic device runs the first application may include a plurality of statuses (or modes), and different statuses may correspond to different first notification types. For example, when the first application is a game application, the running process of the first application may include a loading state, a combat state, a shopping state, and a role setting state. In some solutions, when the electronic device is in a status of the first application in the foreground, if a notification message is received, the electronic device processes the notification message by using a first notification type corresponding to the current status.

In some other solutions, when the electronic device receives the notification message, the electronic device may determine, based on the first notification type corresponding to the current status of the first application in the foreground and the second notification type of the second application that generates the notification message, a notification type used for the notification message. In other words, the electronic device may determine, based on a current running situation of the first application in the foreground and the second notification type of the second application that generates the notification message, the notification type used for the notification message.

Specifically, when the foreground application is the first application, and the electronic device receives the notification message generated by the second application, the electronic device may determine an intersection set of the second notification type of the second application and a first notification type corresponding to a current status 1 of the first application, where the intersection set may be referred to as a third notification type corresponding to the status 1; and process the notification message 1 by using the third notification type. When the first application is currently in a status 2, and the electronic device receives a notification message 2 generated by the second application, the electronic device may determine an intersection set (a third notification type corresponding to the status 2) of the second notification type of the second application and a first notification type corresponding to the status 2 of the first application, and process the notification message 2 by using a notification type in the intersection set.

In some other embodiments, a process in which the electronic device runs the first application may include a plurality of scenarios, and different scenarios may correspond to different first notification types. For example, when the first application is a game application, the running process of the first application may include a loading scenario, a home screen scenario, a combat scenario, and a shopping scenario. In some solutions, when the electronic device is in a scenario of the first application in the foreground, if a notification message is received, the electronic device processes the notification message by using a first notification type corresponding to the current scenario.

In some other solutions, when the electronic device receives the notification message, the electronic device may determine, based on the first notification type corresponding to the current scenario of the first application in the foreground and the second notification type of the second application that generates the notification message, a notification type used for the notification message. In other words, the electronic device may determine, based on the current scenario and a running situation of the first application in the foreground and the second notification type of the second application that generates the notification message, the notification type used for the notification message.

Specifically, when the foreground application is the first application, and the electronic device receives the notification message generated by the second application, the electronic device may determine an intersection set of the second notification type of the second application and a first notification type corresponding to a current scenario 1 of the first application, where the intersection set may be referred to as a third notification type corresponding to the scenario 1; and process the notification message 1 by using the third notification type. When the first application is currently in a scenario 2, and the electronic device receives a notification message 2 generated by the second application, the electronic device may determine an intersection set (a third notification type corresponding to the scenario 2) of the second notification type of the second application and a first notification type corresponding to the scenario 2 of the first application, and process the notification message 2 by using a notification type in the intersection set.

An example in which the process in which the electronic device runs the first application in the foreground may include a plurality of scenarios, and different scenarios may correspond to different first notification types is used for description below. The case in which the process in which the electronic device runs the first application in the foreground includes the plurality of code segments, interfaces, or statuses is similar to the case in which the process in which the electronic device runs the first application in the foreground includes the plurality of scenarios. Details are not described again in this embodiment.

In a solution, a correspondence between different scenarios and different first notification types is preset in code of the first application. In the running process of the first application, the first notification type corresponding to the current scenario may be loaded into a context of the first application in real time. The electronic device may quickly and efficiently learn of the first notification type of the current scenario from the context of the first application, to process the notification message by using the first notification type. Alternatively, a third notification type corresponding to the current scenario is determined based on the first notification type of the current scenario and the second notification type of the second application, to process the notification message by using the first notification type. In this solution, the electronic device does not need to determine the notification type based on a foreground application after determining the foreground application or a current scenario of the foreground application, but may directly process the notification message based on the notification type in the context. Therefore, implementation of system control of the electronic device is relatively simple.

In another solution, the current scenario of the first application and the first notification type corresponding to the current scenario may be stored in a place other than the context, for example, stored in a flash or a hard disk, so that the electronic device can learn of the first notification type of the current scenario from the flash or the hard disk, and process the notification message by using the first notification type. Alternatively, the third notification type corresponding to the current scenario is determined based on the first notification type of the current scenario and the second notification type of the second application, to process the notification message by using the first notification type.

In another solution, the electronic device stores a correspondence between different scenarios of the first application and different first notification types. The electronic device may learn of the current scenario in real time from the first application, and obtain, based on the current scenario, the first notification type corresponding to the current scenario, to process the notification message by using the first notification type. Alternatively, the third notification type corresponding to the current scenario is determined based on the first notification type of the current scenario and the second notification type of the second application, to process the notification message by using the first notification type.

For example, the first application is a game, and a game scenario may include a loading scenario, a home screen scenario, a combat scenario, and a shopping scenario. For a correspondence between each scenario and a first notification type, refer to the following Table 8.

**Table 8**

| Scenario | Loading scenario | Home screen scenario | Combat scenario | Shopping scenario |
|---|---|---|---|---|
| First notification type | Sound notification type and vibration notification type | Vibration notification type and banner notification type | No notification | Badge notification type |

The following describes different processing performed, based on the first notification types that are corresponding to the different scenarios of the first application and that are used by the electronic device in Table 8, on a notification message received by the electronic device.

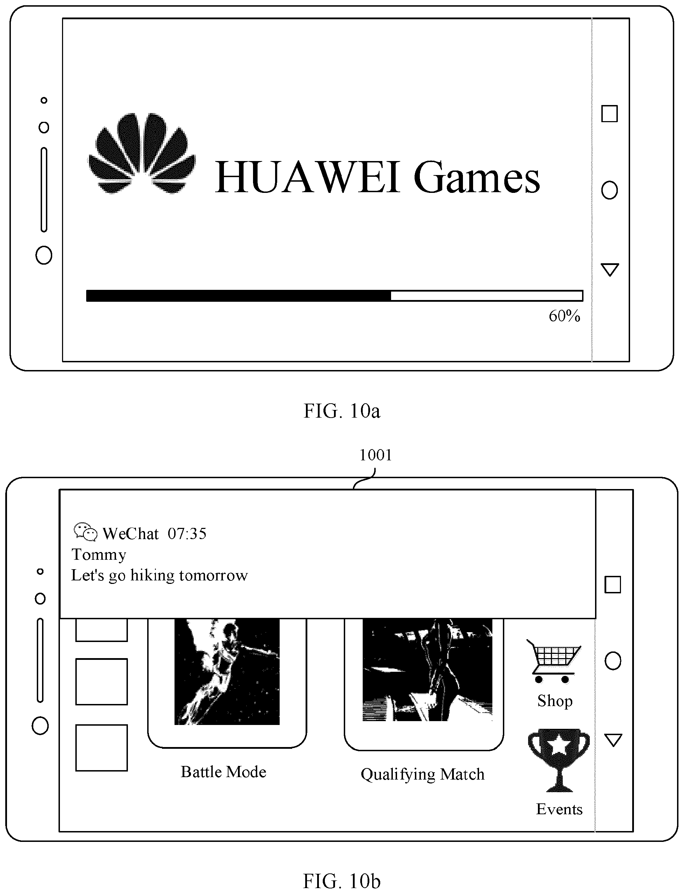

For example, the first application is a game, and the second application is Messaging. In the case shown in Table 8, if the electronic device receives an SMS notification message 1 in a loading scenario shown in FIG. 10a, the electronic device notifies the SMS notification message 1 by using a sound notification type and a vibration notification type included in a first notification type in the loading scenario.

For another example, the first application is a game, and the second application is WeChat. In the case shown in Table 8, if the electronic device receives a WeChat notification message 1 in a home screen scenario shown in FIG. 10b, the electronic device notifies the WeChat notification message 1 by using a banner notification type and a vibration notification type included in a first notification type in the home screen scenario.

The following describes how the electronic device determines the third notification type based on the first notification type corresponding to the current scenario of the first application and the second notification type of the second application, and processes, by using the third notification type, the notification message received by the electronic device.

For example, the first application is a game, the second application is WeChat, and a second notification type of WeChat is a vibration notification type, a banner notification type, and a badge notification type. In the case shown in Table 8, if the electronic device receives a WeChat notification message 1 in the loading scenario shown in FIG. 10a, a third notification type corresponding to the loading scenario is a vibration notification type, and the electronic device notifies the WeChat notification message 1 by using the vibration notification type in the loading scenario.

After the loading scenario shown in FIG. 10a, the electronic device may enter the home screen scenario shown in FIG. 10b. If the electronic device receives a WeChat notification message 2 (or another notification message such as an SMS message) in the home screen scenario shown in FIG. 10b, a third notification type corresponding to the home screen scenario is a vibration notification type and a banner notification type. In this case, as shown in FIG. 10b, the electronic device notifies the WeChat notification message 2 by using a banner 1001 and the vibration notification type in the home screen scenario.

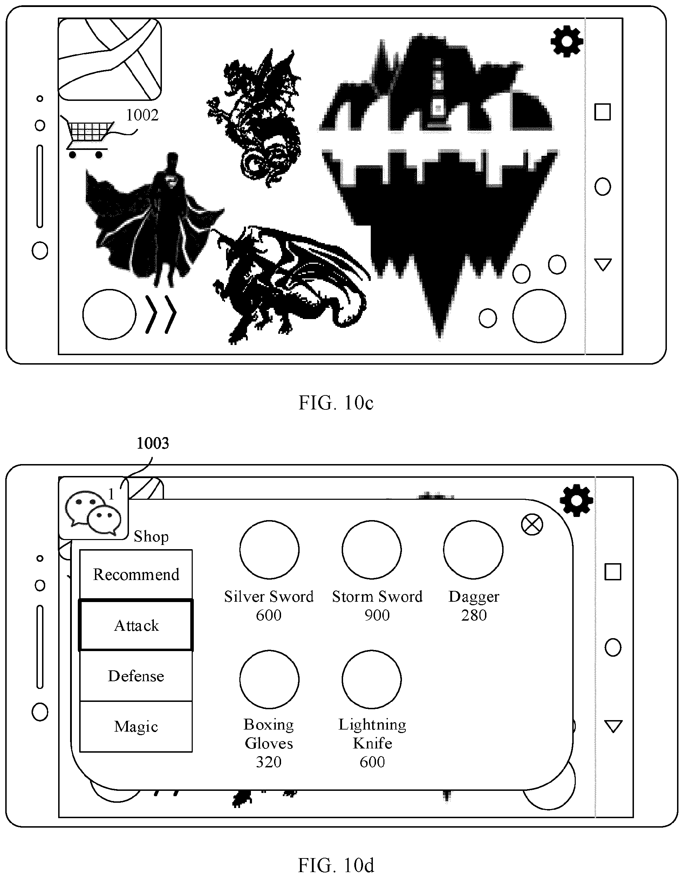

After the user taps a combat mode or a qualifying match in FIG. 10b, the electronic device may enter a combat scenario of a game shown in FIG. 10c. If the electronic device receives a WeChat notification message 3 in the combat scenario shown in FIG. 10c, a third notification type corresponding to the combat scenario is empty, and the electronic device does not notify the WeChat notification message 3 in the combat scenario.

When the user taps a shop control 1002 in FIG. 10c, the electronic device may enter a shopping scenario shown in FIG. 10d. If the electronic device receives a WeChat notification message 4 in the shopping scenario shown in FIG. 10d, a third notification type corresponding to the shopping scenario is a badge notification type. As shown in FIG. 10d, the electronic device notifies the WeChat notification message 4 by using a badge 1003 in the shopping scenario.

For another example, the first application is a video player, and scenarios of the video player may include a scenario in which a video is played and a scenario in which no video is played. For a correspondence between each scenario and a first notification type, refer to the following Table 9.

**Table 9**

| Scenario | Scenario in which a video is played | Scenario in which no video is played |
|---|---|---|
| First notification type | Vibration notification type | All notification types |

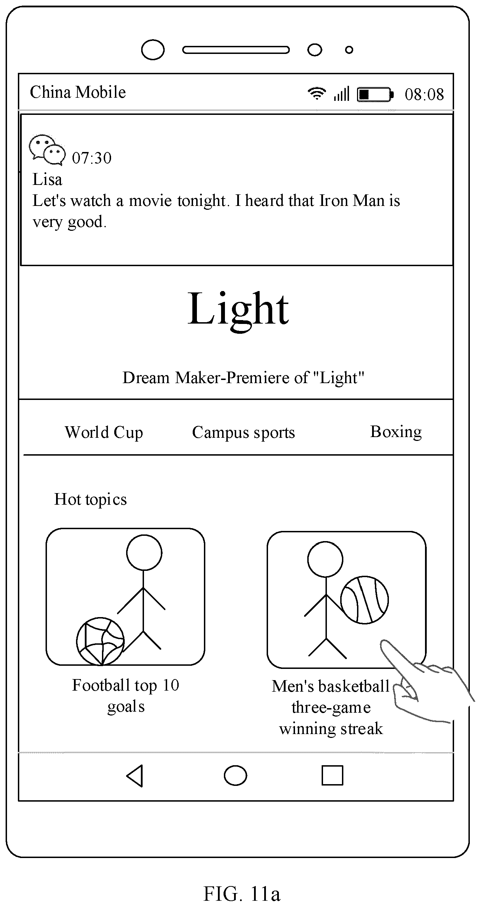

For example, the first application is a game, the second application is WeChat, and a second notification type of WeChat is a vibration notification type and a banner notification type. In the case shown in Table 9, if the electronic device receives a WeChat notification message in a scenario in which no video is played shown in FIG. 11a, a third notification type corresponding to the scenario in which no video is played is the vibration notification type and the banner notification type, and the electronic device performs notification by using the banner notification type and the vibration notification type in the scenario in which no video is played shown in FIG. 11a.

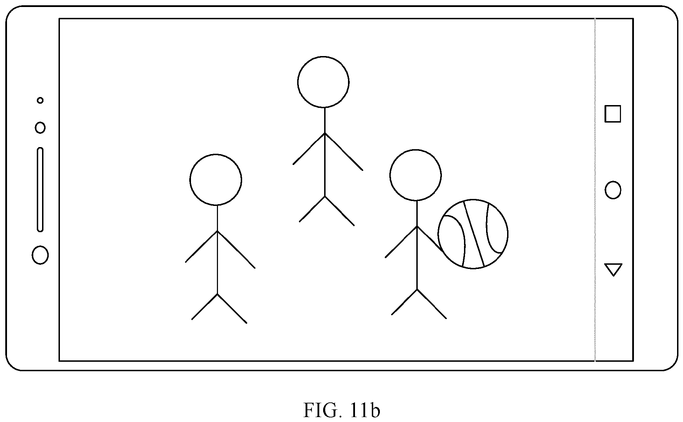

When the user taps to select a video to be played, the electronic device may enter a scenario in which a video is played shown in FIG. 11b. If the electronic device receives a WeChat notification message in the scenario in which a video is played shown in FIG. 11b, a third notification type corresponding to the scenario in which a video is played is a vibration notification type, and the electronic device notifies the generated WeChat notification message based on the vibration notification type in the scenario in which a video is played.

For another example, the first application is a video player, and scenarios of the video player may include a full-screen play scenario and a non-full-screen play scenario. For a correspondence between each scenario and a first notification type, refer to the following Table 10.

**Table 10**

| Scenario | Full-screen play scenario | Non-full-screen play scenario |
|---|---|---|
| First notification type | No notification | Vibration notification type |

For another example, the first application is WeChat, and scenarios of WeChat may include a voice input scenario, a text input scenario, a Moments display scenario, and a Moments sending scenario. For a correspondence between each scenario and a first notification type, refer to the following Table 11.

**Table 11**

| Scenario | Voice input scenario | Text input scenario | Moments display scenario | Moments sending scenario |
|---|---|---|---|---|
| First notification type | Vibration notification type and banner notification type | Sound notification type | Sound notification type and banner notification type | Sound notification type |

In some embodiments, if the electronic device receives, in the scenario 1 of the first application, the notification message 1 generated by the second application, and the third notification type corresponding to the scenario 1 does not include all notification types in the second notification type of the second application, or in other words, the electronic device does not process the notification message 1 by using the entire second notification type of the second application in the scenario 1 of the first application, the electronic device may no longer process the notification message 1 in another scenario before the first application exits in the foreground.

For example, in the scenario shown in FIG. 10a, the first application is a game application, the second application is WeChat, and a second notification type of WeChat includes a vibration notification type, a banner notification type, and a badge notification type. In the case shown in Table 8, if the electronic device receives a WeChat notification message 1 in the loading scenario shown in FIG. 10a, a third notification type corresponding to the loading scenario is a vibration notification type, and the electronic device notifies the WeChat notification message 1 by using the vibration notification type in the loading scenario. The WeChat notification message 1 is no longer processed in scenarios such as the home screen scenario, the combat scenario, and the shopping scenario before the electronic device exits the game application.

In some other embodiments, if the electronic device receives, in the scenario 1 of the first application, the notification message 1 generated by the second application, and the third notification type corresponding to the scenario 1 does not include all notification types in the second notification type of the second application, the electronic device may process the notification message 1 by using the fourth notification type after exiting the first application in the foreground. The fourth notification type is a notification type that is in the second notification type of the second application and that is not used for the notification message 1 when the electronic device displays the first application in the foreground.

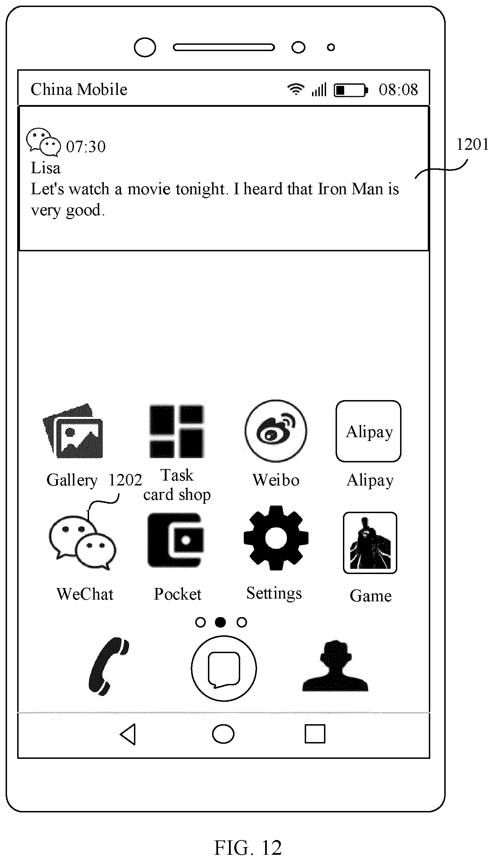

Still taking the scenario shown in FIG. 10a as an example, the first application is a game application, the second application is WeChat, and a second notification type of WeChat includes a vibration notification type, a banner notification type, and a badge notification type. In the case shown in Table 8, if the electronic device receives a WeChat notification message 1 in the loading scenario shown in FIG. 10a, a third notification type corresponding to the loading scenario is a vibration notification type, and the electronic device notifies the WeChat notification message 1 by using the vibration notification type in the loading scenario. After the game application exits, as shown in FIG. 12, the electronic device may notify the WeChat notification message 1 by using a notification type with a banner 1201 and a badge 1202 that is in the second notification type of WeChat and that is not executed for the notification message 1 when the electronic device displays the game in the foreground. The notification type with the banner 1201 and the badge 1202 may be referred to as the fourth notification type.

In some other embodiments, if the electronic device receives, in the scenario 1 of the first application, the notification message 1 generated by the second application, and the third notification type corresponding to the scenario 1 does not include all notification types in the second notification type of the second application, after exiting the first application in the foreground, the electronic device may notify, by using all the notification types in the second notification type of the second application, the notification message 1 generated by the second application in the scenario 1 of the first application in the foreground.

Still taking the scenario shown in FIG. 10a as an example, after exiting the game application, the electronic device may notify the WeChat notification message 1 by using the vibration notification type, the banner notification type, and the badge notification type in the second notification type of WeChat.

In some other embodiments, if the electronic device receives, in the scenario 1 of the first application, the notification message 1 generated by the second application, and the third notification type corresponding to the scenario 1 does not include all notification types in the second notification type of the second application, after exiting the first application in the foreground, the electronic device may notify, by using a preset notification type, the notification message 1 generated by the second application in the scenario 1 of the first application in the foreground.

In some other embodiments, the electronic device receives, in the scenario 1 of the first application, the notification message 1 generated by the second application. Regardless of whether the third notification type corresponding to the scenario 1 includes all notification types in the second notification type of the second application, the electronic device no longer processes the notification message 1 after exiting the first application in the foreground.

In some other embodiments, the electronic device receives, in the scenario 1 of the first application, the notification message 1 generated by the second application, and the third notification type corresponding to the scenario 1 of the first application does not include all notification types in the second notification type of the second application. In the scenario 2 of the first application, if an intersection set 1 of the first notification type corresponding to the scenario 2 and the second notification type of the second application includes a fifth notification type other than an intersection set 2, the electronic device may process the notification message 1 by using the fifth notification type in the scenario 2. The intersection set 2 is an intersection set of a first notification type of another scenario (for example, the scenario 1) before a current scenario (the scenario 2) and the second notification type of the second application in a process in which the electronic device currently displays the first application in the foreground. In other words, the fifth notification type is a notification type that is in the second notification type of the second application and that is not used for the notification message 1 in a previous scenario in the process in which the electronic device currently displays the first application in the foreground.

For example, the first application is a game, the second application is WeChat, and a second notification type of WeChat includes a vibration notification type, a banner notification type, and a badge notification type. In the case shown in Table 8, if the electronic device receives a WeChat notification message 1 in the loading scenario of the game shown in FIG. 10a, a third notification type corresponding to the loading scenario is a vibration notification type, and the electronic device notifies the WeChat notification message 1 by using the vibration notification type in the loading scenario. Then, in the home screen scenario of the game shown in FIG. 10b, because an intersection set 1 (a vibration notification type and a banner notification type) of a first notification type corresponding to the home screen scenario and the second notification type of WeChat includes a banner notification type (a fifth notification type corresponding to the home screen scenario) other than an intersection set 2 (an intersection set of the first notification type corresponding to the loading scenario and the second notification type of WeChat, to be specific, a vibration notification type), the electronic device may notify the WeChat notification message 1 by using the banner notification type in the home screen scenario. Then, in the combat scenario of the game shown in FIG. 10c, the first notification type is no notification. Therefore, the electronic device does not process the WeChat notification message 1 in the combat scenario. Then, in the shopping scenario shown in FIG. 10d, because an intersection set 1 of a first notification type corresponding to the shopping scenario and the second notification type of WeChat includes a badge notification type (a fifth notification type corresponding to the shopping scenario) other than an intersection set 2 (an intersection set of first notification types corresponding to the loading scenario, the home screen scenario, and the combat scenario and the second notification type of WeChat, to be specific, a vibration notification type and a banner notification type), the electronic device may notify the WeChat notification message 1 by using the badge notification type in the shopping scenario.

If a set of the third notification type corresponding to the scenario 1 of the first application and a fifth notification type corresponding to another scenario after the scenario 1 does not include all notification types in the second notification type of the second application, or in other words, the notification type used by the electronic device for the notification message 1 when the first application is displayed in the foreground does not include all the notification types in the second notification type of the second application, the electronic device may process the notification message 1 by using a fourth notification type after exiting the first application in the foreground. The fourth notification type is a notification type that is in the second notification type of the second application and that is not used for the notification message 1 when the electronic device displays the first application in the foreground.

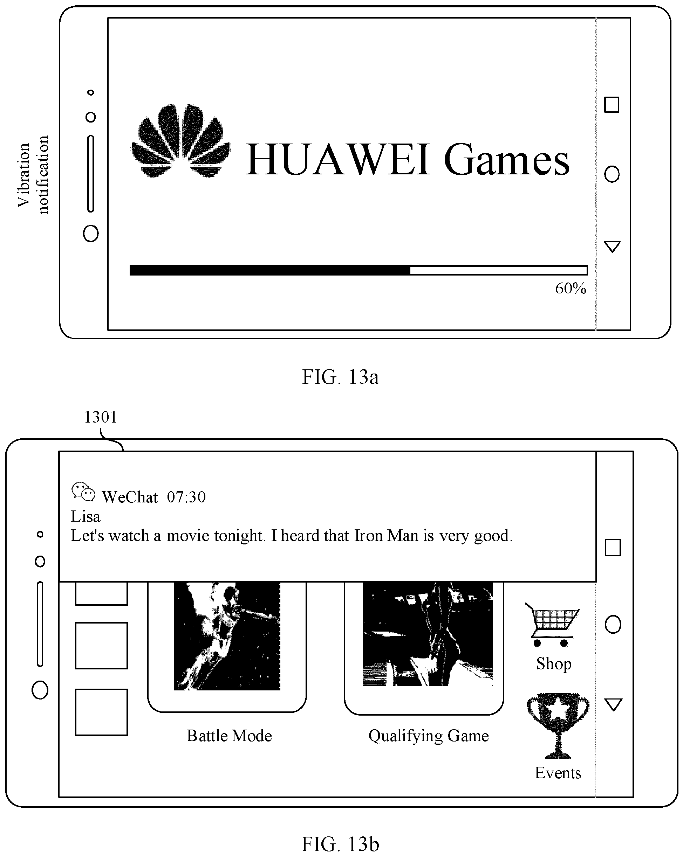

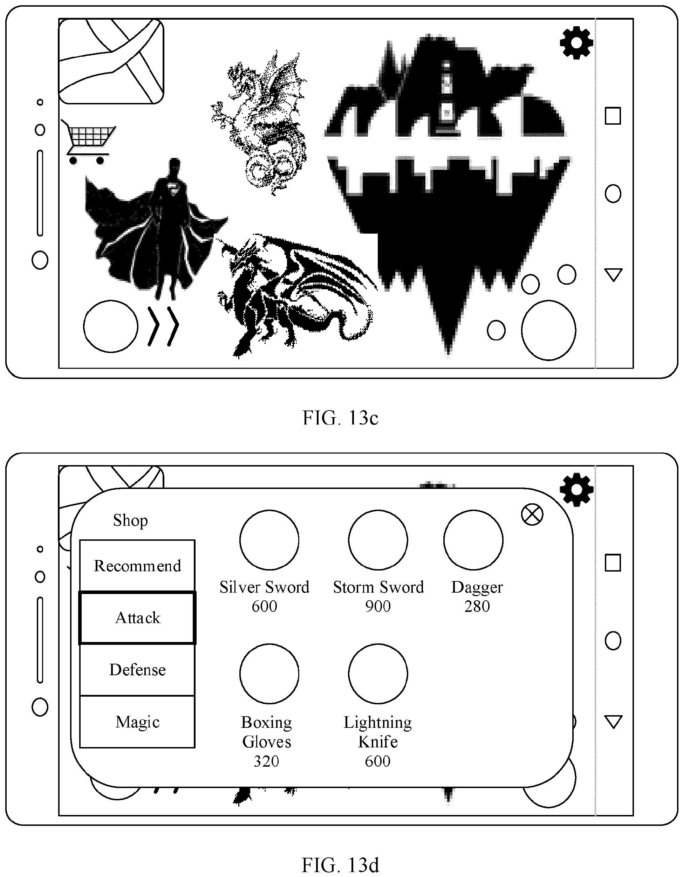

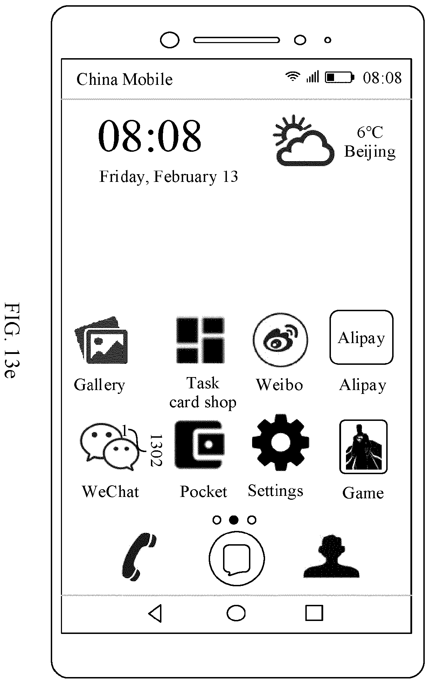

For example, the first application is a game, the second application is WeChat, and a second notification type of WeChat includes a vibration notification type, a banner notification type, and a badge notification type. In the case shown in Table 12, if the electronic device receives a WeChat notification message 1 in a loading scenario shown in FIG. 13a, a third notification type corresponding to the loading scenario is a vibration notification type, and the electronic device performs notification by using the vibration notification type in the loading scenario. In a home screen scenario of the game shown in FIG. 13b, because a first notification type corresponding to the home screen scenario includes a banner notification type (a fifth notification type corresponding to the home screen scenario) in the second notification type other than the vibration notification type (the third notification type corresponding to the loading scenario), the electronic device may notify the WeChat notification message 1 by using a banner 1301 in the home screen scenario. In a combat scenario shown in FIG. 13c, the first notification type is no notification. Therefore, the electronic device does not continue to notify the WeChat notification message 1. In a shopping scenario shown in FIG. 13d, the first notification type is a banner notification type, and does not include a badge notification type in the second notification type other than the vibration notification type (the third notification type corresponding to the loading scenario) and the banner notification type (the fifth notification type corresponding to the home screen scenario). Therefore, the electronic device does not process the WeChat notification message 1 in the shopping scenario. Referring to FIG. 13e, after exiting the game, the electronic device may notify the WeChat notification message 1 by using a badge 1302 (the fourth notification type).

**Table 12**

| Scenario | Loading scenario | Home screen scenario | Combat scenario | Shopping scenario |
|---|---|---|---|---|
| First notification type | Sound notification type and vibration notification type | Vibration notification type and banner notification type | No notification | Banner notification type |

In some embodiments, if the notification type used for the notification message 1 when the electronic device displays the first application in the foreground does not include all notification types in the second notification type of the second application, after exiting the first application in the foreground, the electronic device may notify, by using all the notification types in the second notification type of the second application, the notification message 1 generated by the second application when the first application is displayed in the foreground.

In some other embodiments, if the notification type used for the notification message 1 when the electronic device displays the first application in the foreground does not include all notification types in the second notification type of the second application, after exiting the first application in the foreground, the electronic device may process, by using the preset notification type, the notification message 1 generated by the second application when the foreground application is the first application.

In some other embodiments, when the third notification type corresponding to the scenario 1 of the first application does not include all notification types in the second notification type of the second application, but the notification type used for the notification message 1 when the electronic device displays the first application in the foreground includes all the notification types in the second notification type of the second application, after exiting the first application in the foreground, the electronic device may process, by using all the notification types in the second notification type of the second application or by using the preset notification type, the notification message 1 generated by the second application in the scenario 1 of the first application.

In some other embodiments, regardless of whether the notification type used for the notification message 1 when the electronic device displays the first application in the foreground includes all the notification types in the second notification type of the second application, after exiting the first application in the foreground, the electronic device no longer processes the notification message 1 generated by the second application in the scenario 1 of the first application.

In some other embodiments, the second application may generate a plurality of types of notification messages, and different types of notification messages may correspond to different second notification types. For example, the plurality of types of notification messages are a notification message of a text type, a notification message of a picture type, and a notification message of a video type. In this way, when the foreground application is the first application, the electronic device may determine the notification type of the notification message 1 based on the first notification type of the first application or a first notification type corresponding to a specific scenario of the first application and based on a second notification type corresponding to a type of the notification message 1 currently generated by the second application. Details are not described herein.

In some other embodiments, the second application may generate a plurality of levels of notification messages, and different levels of notification messages may correspond to different second notification types. For example, a level of a notification message sent by an important contact is higher, or a level of a notification message sent by a frequent contact is higher, or a level of a notification message including a preset keyword is higher. In this way, when the foreground application is the first application, the electronic device may determine the notification type of the notification message 1 based on the first notification type of the first application or a first notification type corresponding to a specific scenario of the first application and based on a second notification type corresponding to a level of the notification message 1 currently generated by the second application. Details are not described herein.

The foregoing is described by using an example in which one application is displayed in the foreground. Alternatively, n applications may be displayed in the foreground on the electronic device, and n is an integer greater than 1. The touchscreen of the electronic device may be divided into a plurality of sub-screens, and each sub-screen may be configured to display an application interface of one foreground application. A manner of arranging the plurality of sub-screens may be not limited. For example, the plurality of sub-screens may be vertically or horizontally arranged, or a large sub-screen may be located in the middle of the touchscreen of the electronic device, and a plurality of small sub-screens are around the large sub-screen. This is not limited in this embodiment.

When the first application displayed in the foreground includes n applications (A1-An), in some embodiments, for each first application Ai (where i is any integer from 1 to n) displayed on each sub-screen, the electronic device may process, based on a first notification type of each first application Ai in the foreground and the second notification type of the second application by using the notification message processing method provided in the foregoing embodiment, the notification message generated by the second application.

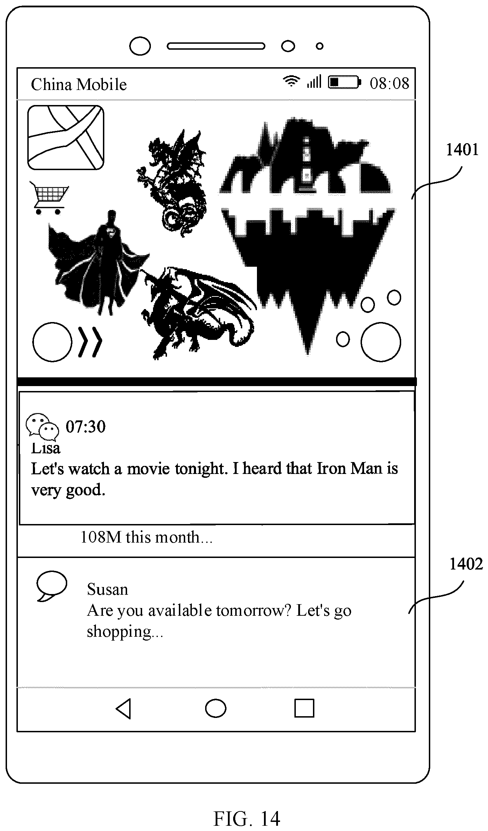

For example, referring to FIG. 14, the touchscreen of the electronic device includes a sub-screen 1401 and a sub-screen 1402. A first application 1 displayed on the sub-screen 1401 is a game, a current scenario is a combat scenario of the game, a first application 2 displayed on the sub-screen 1402 is Messaging, and the second application is WeChat. A first notification type corresponding to the combat scenario of the game is no notification, a first notification type of Messaging is all notification types, and a second notification type of WeChat is a sound notification type and a banner notification type. When the electronic device receives a WeChat notification message 1 generated by WeChat, referring to FIG. 14, the electronic device determines, based on the first notification type corresponding to the combat scenario of the game and the second notification type of WeChat, not to notify the WeChat notification message 1 on the sub-screen 1401. The electronic device determines, based on the first notification type of Messaging and the second notification type of WeChat, to notify the WeChat notification message 1 on the sub-screen 1402 by using the banner notification type, and notifies the WeChat notification message 1 by using the sound notification type.

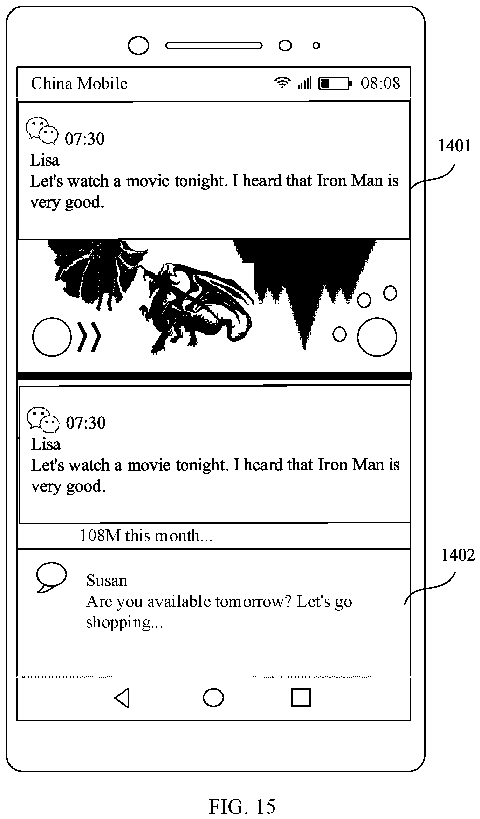

In another case, if the first notification type corresponding to the combat scenario of the game is a banner notification, when the electronic device receives the WeChat notification message 1 generated by WeChat, referring to FIG. 15, the electronic device determines, based on the first notification type corresponding to the combat scenario of the game and the second notification type of WeChat, to perform banner notification on the WeChat notification message 1 on the sub-screen 1401. The electronic device determines, based on the first notification type of Messaging 2 and the second notification type of WeChat, to notify the WeChat notification message 1 by using the sound notification type and the banner notification type.

In some other embodiments, if the second notification type of the second application includes a display notification type, and first notification types of a plurality of foreground applications of the electronic device each include the display notification type, the electronic device may perform display notification on a sub-screen corresponding to one of the plurality of foreground applications.

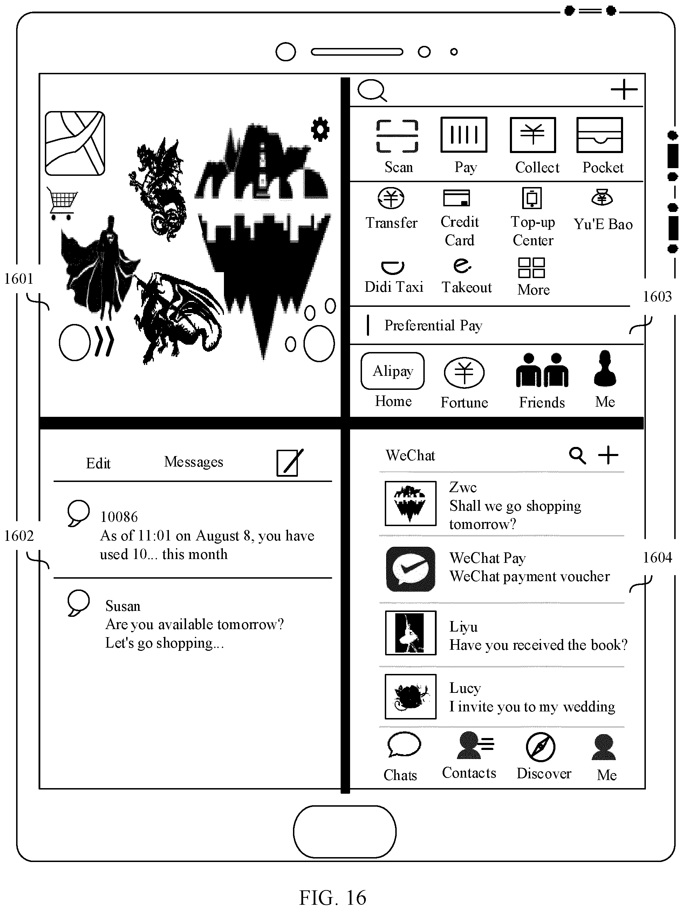

For example, referring to FIG. 16, the electronic device may be a tablet computer. The touchscreen of the electronic device includes a sub-screen 1401, a sub-screen 1402, a sub-screen 1403, and a sub-screen 1404. A first application 1 displayed on the sub-screen 1401 is a game A1, a current scenario is a combat scenario of the game A1, a first application 2 displayed on the sub-screen 1402 is Messaging A2, a first application 3 displayed on the sub-screen 1403 is Alipay A3, a first application 4 displayed on the sub-screen 1404 is WeChat A4, and the second application is WeChat. A first notification type corresponding to the combat scenario of the game A1 is no notification, a first notification type of Messaging A2 is all notification types, a first notification type of Alipay A3 is a sound notification type and a banner notification type, a first notification type of WeChat A4 is a banner notification type, and a second notification type of WeChat is a sound notification type and a banner notification type. Therefore, Messaging A2, Alipay A3, and WeChat A4 displayed in the foreground all support the banner notification type (a display notification type). Therefore, the electronic device may perform banner notification on one of the sub-screen 1402, the sub-screen 1403, and the sub-screen 1404 corresponding to Messaging A2, Alipay A3, and WeChat A4.

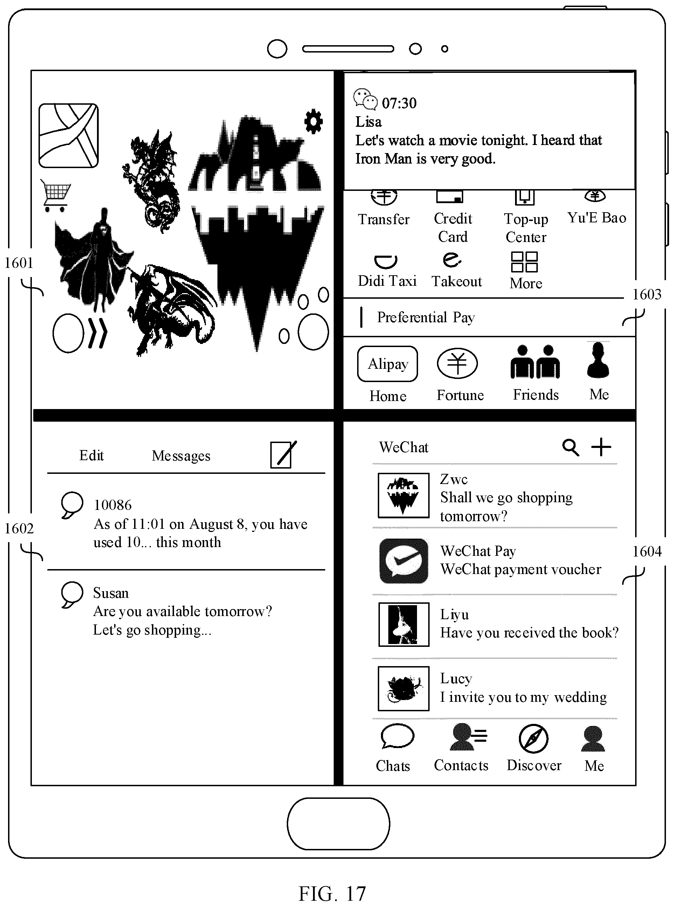

In one case, the electronic device may randomly select one sub-screen from sub-screens corresponding to a plurality of foreground applications that support the display notification type, to perform display notification. For example, the electronic device may randomly select one sub-screen from the sub-screen 1402, the sub-screen 1403, and the sub-screen 1404 to perform banner notification. For example, referring to FIG. 17, the electronic device may perform banner notification on the sub-screen 1403 in which Alipay A3 is located.

In another case, the electronic device may display the notification message on a sub-screen on which a foreground application related to the notification message is located in the plurality of foreground applications that support the display notification type. If the second application that generates the notification message and the first application Ai (i is any integer from 1 to n) in the foreground belong to a same application type, the notification message generated by the second application is related to the first application Ai in the foreground. For example, application types may include an instant messaging application, a social application, and a video play application. Alternatively, if the second application that generates the notification message and the first application Ai in the foreground belong to a same priority, the notification message generated by the second application is related to the first application Ai in the foreground. For example, WeChat and Messaging may belong to a same priority, and a WeChat notification message is related to the Messaging application displayed in the foreground.

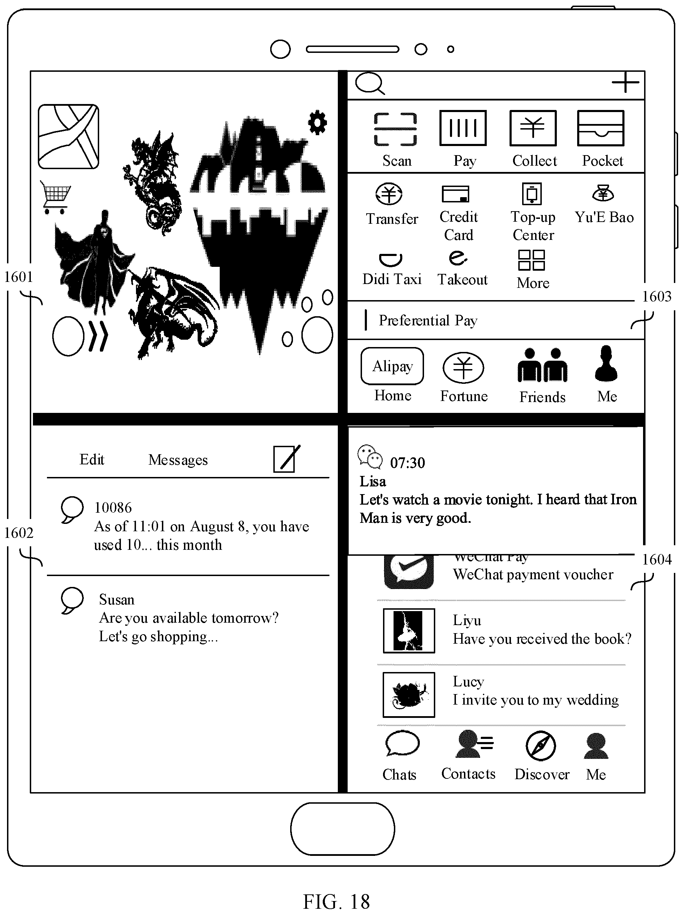

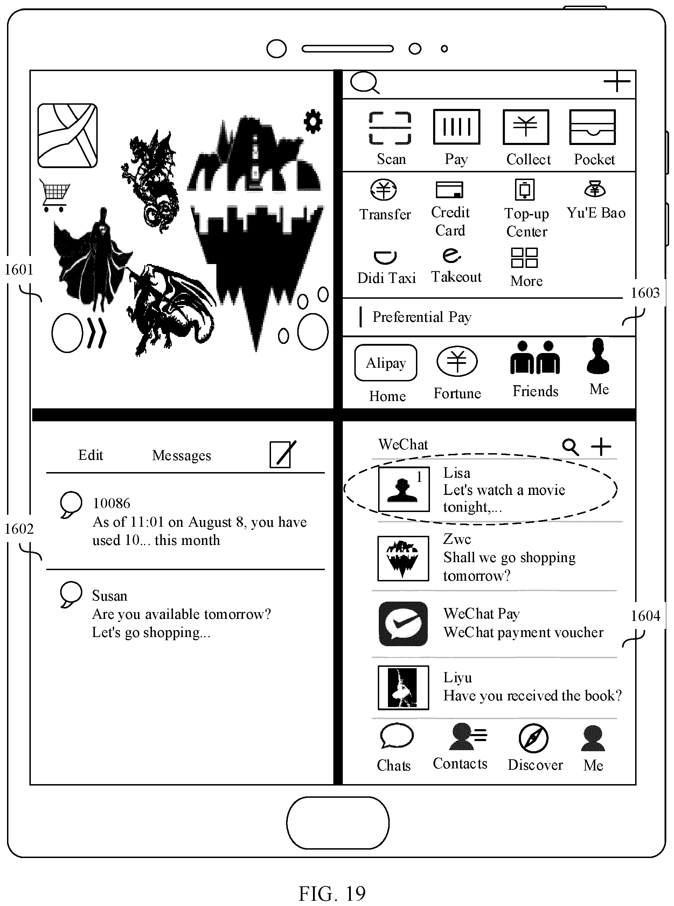

For example, in the game A1, Messaging A2, Alipay A3, and WeChat A4 displayed in the foreground, the WeChat notification message is related to WeChat A4 displayed in the foreground. Therefore, referring to FIG. 18, the electronic device may perform banner notification on the sub-screen 1404 on which WeChat A4 is located. Alternatively, referring to a part in dashed lines in FIG. 19, the electronic device may perform display notification on the WeChat notification message on an application interface of WeChat A4. For another example, foreground applications include the game A1, Messaging A2, Alipay A3, and a video player A4. The WeChat notification message is related to Messaging A2 that also belongs to an instant messaging application. Therefore, the electronic device may perform banner notification on the sub-screen 1402 in which Messaging A2 is located.

In some other embodiments, if the electronic device determines, based on a first notification type of any first application Ai in the foreground and the second notification type of the second application, that the notification message generated by the second application is to be processed by using the display notification type, the electronic device may perform display notification on a sub-screen on which a foreground application related to the notification message of the second application is located.

For example, referring to FIG. 16, the touchscreen of the electronic device includes a sub-screen 1401, a sub-screen 1402, a sub-screen 1403, and a sub-screen 1404. A first application 1 displayed on the sub-screen 1401 is a game A1, a current scenario is a combat scenario, a first application 2 displayed on the sub-screen 1402 is Messaging A2, a first application 3 displayed on the sub-screen 1403 is Alipay A3, a first application 4 displayed on the sub-screen 1404 is WeChat A4, and the second application is WeChat. A first notification type corresponding to the combat scenario of the game A1 is no notification, a first notification type of Messaging A2 is all notification types, a first notification type of the Alipay application A3 is a sound notification type, a first notification type of WeChat A4 is a vibration notification type, and a second notification type of WeChat is a sound notification type and a banner notification type. It may be learned that a third notification type corresponding to Messaging A2 displayed in the foreground is a banner notification type. The electronic device may determine, in the game A1, Messaging A2, Alipay A3, and WeChat A4, that an application related to a WeChat notification message is WeChat A4 in the foreground. Therefore, referring to FIG. 18, the electronic device may perform banner notification on the sub-screen 1404 on which WeChat A4 is located. Alternatively, referring to a part in dashed lines in FIG. 19, the electronic device may perform display notification on the WeChat notification message on an application interface of WeChat A4.

When n first applications are displayed in the foreground, in some other embodiments, the electronic device may determine, based on first notification type of all first applications A1-An displayed in the foreground and the second notification type of the second application, the notification type of the notification message generated by the second application.

For example, the touchscreen of the electronic device includes a sub-screen 1401 and a sub-screen 1402. A first application 1 displayed in the foreground on the sub-screen 1401 is a game A1, a current scenario is a combat scenario of the game, a first application 2 displayed on the sub-screen 1402 is Messaging A2, and the second application is WeChat. A first notification type corresponding to the combat scenario of the game A1 is no notification, a first notification type of Messaging A2 is all notification types, and a second notification type of WeChat is a sound notification type and a banner notification type. Therefore, although the first notification type of Messaging A2 is all notification types, the first notification type corresponding to the combat scenario of the game A1 is no notification. Therefore, the electronic device determines not to notify a WeChat notification message 1 on the sub-screen 1401 and the sub-screen 1402.

In one case, the electronic device may process, based on a first notification type that includes a minimum quantity of notification types in the first notification types of the first applications A1-An in the foreground and the second notification type of the second application, the notification message generated by the second application.

When determining, based on the first notification type that includes the minimum quantity of notification types in the first notification types of the first applications A1-An in the foreground and the second notification type of the second application, that display notification needs to be performed on the notification message generated by the second application, the electronic device may randomly display the notification message on any sub-screen, or may perform display notification on the notification message on a sub-screen on which a foreground application related to the notification message is located. For example, the touchscreen of the electronic device includes a sub-screen 1401, a sub-screen 1402, a sub-screen 1403, and a sub-screen 1404. A first application 1 in the foreground on the sub-screen 1401 is a game A1, a current scenario is a combat scenario of the game, a first application 2 in the foreground on the sub-screen 1402 is Messaging A2, a first application 3 in the foreground on the sub-screen 1403 is Alipay A3, a first application 4 in the foreground on the sub-screen 1404 is WeChat A4, and the second application is WeChat. A first notification type corresponding to the combat scenario of the game A1 is a vibration notification type and a badge notification type, a first notification type of Messaging A2 is all notification types, a first notification type of Alipay A3 is a sound notification type, a banner notification type, and a badge notification type, a first notification type of WeChat A4 is a vibration notification type, a badge notification type, and a banner notification type, and a second notification type of WeChat is a badge notification type and a banner notification type. It may be learned that the first notification type that includes the minimum quantity of notification types is the first notification type corresponding to the combat scenario of the game A1, to be specific, the vibration notification type and the badge notification type. Therefore, the electronic device determines, based on the first notification type corresponding to the combat scenario of the game A1 and the second notification type of WeChat, to notify the WeChat notification message by using the badge notification type (a display notification type). Specifically, the electronic device may randomly display the WeChat notification message on any sub-screen, or the electronic device may perform badge notification on the notification message on a sub-interface in which WeChat related to the WeChat notification message is located, or the electronic device may perform display notification on the notification message on an application interface of a sub-screen on which WeChat related to the WeChat notification message is located.

In another case, the electronic device may process, based on a first notification type having a minimum intersection set with the second notification type of the second application in the first notification types of the first applications A1-An in the foreground and the second notification type of the second application, the notification message generated by the second application. For example, the touchscreen of the electronic device includes a sub-screen 1401 and a sub-screen 1402. A first application 1 displayed on the sub-screen 1401 is a game A1, a current scenario is a combat scenario of the game, a first application 2 displayed on the sub-screen 1402 is Messaging A2, and the second application is WeChat. A first notification type corresponding to the combat scenario of the game A1 is no notification, a first notification type of Messaging A2 is all notification types, and a second notification type of WeChat is a sound notification type and a banner notification type. Therefore, an intersection set of the first notification type corresponding to the combat scenario of the game A1 and the second notification type of WeChat has a minimum quantity of notification types, and is an empty set. Therefore, the electronic device may determine, based on the first notification type corresponding to the combat scenario of the game A1 and the second notification type of WeChat, not to process the WeChat notification message 1 and not to perform display notification on the WeChat notification message 1 on the sub-screen 1401 and the sub-screen 1402.

In another case, the electronic device may notify the WeChat notification message 1 based on the first notification types of the first application A1-An in the foreground, the second notification type of the second application, and a preset display location of the notification message.

For example, the touchscreen of the electronic device includes a sub-screen 1401 and a sub-screen 1402. A first application 1 displayed on the sub-screen 1401 is a game A1, a current scenario is a combat scenario of the game, a first application 2 displayed on the sub-screen 1402 is Messaging A2, and the second application is WeChat. A first notification type corresponding to the combat scenario of the game A1 is no notification, a first notification type of Messaging A2 is all notification types, a second notification type of WeChat is a sound notification type and a banner notification type, and a preset display location of the WeChat notification message is the top of the touchscreen of the electronic device. When the electronic device receives a WeChat notification message 1 generated by WeChat, the electronic device determines, based on the first notification type corresponding to the combat scenario of the game A1 and the second notification type of WeChat, that the WeChat notification message 1 may not to be processed. The electronic device determines, based on the first notification type of Messaging A2 and the second notification type of WeChat, that the WeChat notification message 1 may be notified on the sub-screen 1402 by using the banner notification type, and may be prompted by using a vibration notification type. However, the preset display location of the WeChat notification message is the top of the electronic device, and the sub-screen 1402 on which Messaging A2 is located is not on the top of the touchscreen of the electronic device. Therefore, the electronic device does not display the WeChat notification message 1 on the sub-screen 1402 by using the banner notification type, and the electronic device prompts the WeChat notification message 1 only by using the vibration notification type.

In some other embodiments, different interfaces (or different statuses, different scenarios, or different code segments) of the first application separately correspond to different whitelists. When a first interface of the first application is displayed in the foreground, the notification message is notified if the second application that generates the notification message is in a whitelist corresponding to the first interface.

In some other embodiments, different interfaces (or different statuses, different scenarios, or different code segments) of the first application separately correspond to different blacklists. When a first interface of the first application is displayed in the foreground, the notification message is not notified if the second application that generates the notification message is in a blacklist corresponding to the first interface.

In some other embodiments, different interfaces (or different statuses, different scenarios, or different code segments) of the first application separately correspond to different first notification types and different whitelists. When a first interface of the first application is displayed in the foreground, if the second application that generates the notification message is in a whitelist corresponding to the first interface, the notification message is notified by using the first notification type corresponding to the first interface.

In some other embodiments, different interfaces (or different statuses, different scenarios, or different code segments) of the first application separately correspond to different first notification types and different whitelists, and the second application corresponds to the second notification type. When a first interface of the first application is displayed in the foreground, if the second application that generates the notification message is in a whitelist corresponding to the first interface, the notification message is notified by using a notification type in an intersection set of the first notification type corresponding to the first interface and the second notification type of the second application.

In addition, in this embodiment, in a scenario in which the electronic device performs display notification on the received notification message, if display duration is greater than or equal to preset duration (for example, 2s), and the electronic device does not receive an operation performed by the user on the displayed notification message, the electronic device may stop displaying the notification message, to avoid visual interference from the display of the notification message to the user and obstruction in an application interface of a foreground application as much as possible.

In addition, the notification message in this embodiment is not limited to a notification message that requires sound or visual display. As long as information is used to notify another entity, the information may be considered as a notification message. For example, the second application sends the notification message, to notify the system of the electronic device or the first application displayed in the foreground that the second application is to be switched to the foreground. The electronic device determines, based on the first notification type of the first application, whether to switch the second application to the foreground. In this way, the first application in the foreground can prevent some other applications from preempting the display of the first application in the foreground.

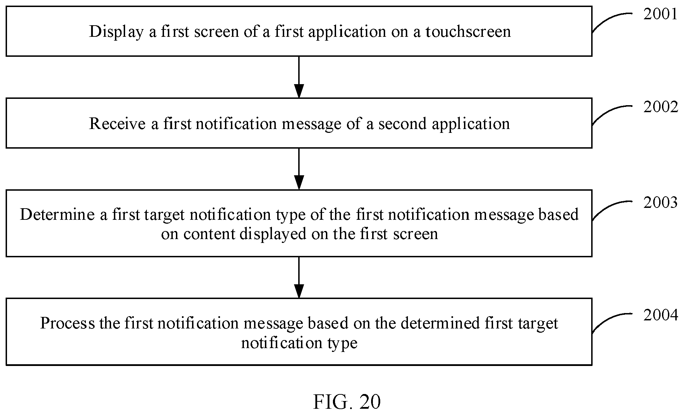

With reference to the foregoing embodiments and accompanying drawings, as shown in FIG. 20, an embodiment provides a notification message processing method. The method may be implemented in the electronic device (for example, a mobile phone or a tablet computer) shown in FIG. 1 and FIG. 2. The method may specifically include the following steps.

S2001. An electronic device displays a first interface of a first application on a touchscreen.

For example, the first application may be a game application, and the first interface may be a combat interface of the game shown in FIG. 10c. Alternatively, the first interface may be a loading interface shown in FIG. 10a, a home screen shown in FIG. 10b (excluding the banner 1001), a shopping interface shown in FIG. 10d (excluding the badge 1003), or the like. In some embodiments, the first interface may be entirely displayed on the touchscreen, or may be partially displayed on the touchscreen.

S2002. The electronic device receives a first notification message of a second application.

The second application may be different from the first application, or may be the same as the first application.

For example, the second application may be WeChat. When the first interface is the combat interface shown in FIG. 10c, the first notification message may be the foregoing WeChat notification message 3. For another example, the second application may be a power management application, and the first notification message may be a low-power notification message.

S2003. The electronic device determines a first target notification type of the first notification message based on the first interface.

For example, when the first interface is the combat interface shown in FIG. 10c, the electronic device may determine, based on the combat interface, that a first target notification type of the WeChat notification message 3 is no notification.

S2004. The electronic device processes the first notification message based on the determined first target notification type.

After the electronic device determines that the first target notification type of the WeChat notification message 3 is no notification in step S2003, the electronic device does not notify the WeChat notification message 3 in step S2004 if the combat interface is displayed.

In the foregoing technical solution, the electronic device may determine a notification type of a notification message of the second application based on an interface of the first application displayed in the foreground, so as not to interfere with, as much as possible, normal running of the first application displayed in the foreground.

In some embodiments, different interfaces of the first application may separately correspond to first notification types. A first notification type corresponding to the first interface is the first target notification type in step S2003.

In some other embodiments, different interfaces of the first application may separately correspond to first notification types, and the second application may correspond to a second notification type. That the electronic device determines a notification type of the first notification message based on the first interface in step S2003 may specifically include: The electronic device determines a first intersection set of a first notification type corresponding to the first interface of the first application and the second notification type corresponding to the second application, where a notification type in the first intersection set is the first target notification type of the first notification message.

For example, the first application is a game, the first interface is a combat interface of the game, and a first notification type corresponding to the combat interface of the game is no notification. The second application is WeChat, and a second notification type of WeChat is a vibration notification type, a banner notification type, and a badge notification type. The electronic device determines that the first intersection set is empty. Therefore, in step S2004, the electronic device does not notify the WeChat notification message 3 if the electronic device displays the combat interface in the foreground.

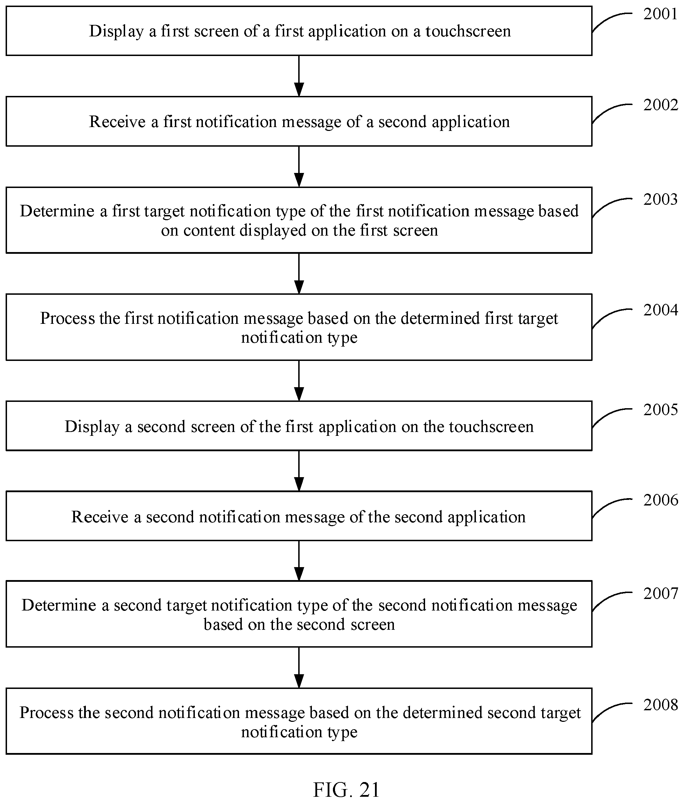

In some other embodiments, after step S2004, referring to FIG. 21, the method may further include the following steps.

S2005. The electronic device displays a second interface of the first application on the touchscreen.

For example, if the first application is a game, and the first interface is the combat interface shown in FIG. 10c, the second interface may be the shopping interface shown in FIG. 10d (excluding the badge 1003).

S2006. The electronic device receives a second notification message of the second application.

The second application in step S2006 may be the same as or different from the second application in step S2002. For example, both the second application in step S2006 and the second application in step S2002 are WeChat, and the electronic device receives the foregoing WeChat notification message 4 when displaying the shopping interface.

S2007. The electronic device determines a second target notification type of the second notification message based on the second interface.

The second target notification type is different from the first target notification type. For example, the electronic device may determine, based on the shopping interface shown in FIG. 10d, that a second target notification type of the WeChat notification message 4 is a badge notification type.

S2008: The electronic device processes the second notification message based on the determined second target notification type.

After the electronic device determines that the second target notification type of the WeChat notification message 4 is a badge notification type in step S2007, referring to FIG. 10d, the electronic device notifies the WeChat notification message 4 by using the badge 1003 in step S2008 if the shopping interface is displayed.

In other words, the electronic device may determine, based on different interfaces of an application displayed in the foreground, different notification types of different notification messages received by the electronic device, thereby dynamically reducing, in real time, interference to the first application displayed in the foreground.

In some embodiments, different interfaces of the first application may separately correspond to first notification types, and a first notification type corresponding to the second interface is the second target notification type in step S2007.

In some other embodiments, when different interfaces of the first application separately correspond to first notification types, and the second application corresponds to the second notification type, step S2007 may specifically include: The electronic device determines a second intersection set of a first notification type corresponding to the second interface of the first application and the second notification type corresponding to the second application, where a notification type in the second intersection set is the second target notification type of the second notification message. The first notification type corresponding to the second interface is different from the first notification type corresponding to the first interface.

For example, the first application is a game, the second interface is a shopping interface of the game, and a first notification type corresponding to the shopping interface of the game is a badge notification type. The second application is WeChat, and a second notification type of WeChat is a vibration notification type, a banner notification type, and a badge notification type. The electronic device determines that the second intersection set is the badge notification type. Therefore, in step S2008, the electronic device notifies the WeChat notification message 4 by using the badge notification type if the electronic device displays the shopping interface in the foreground.

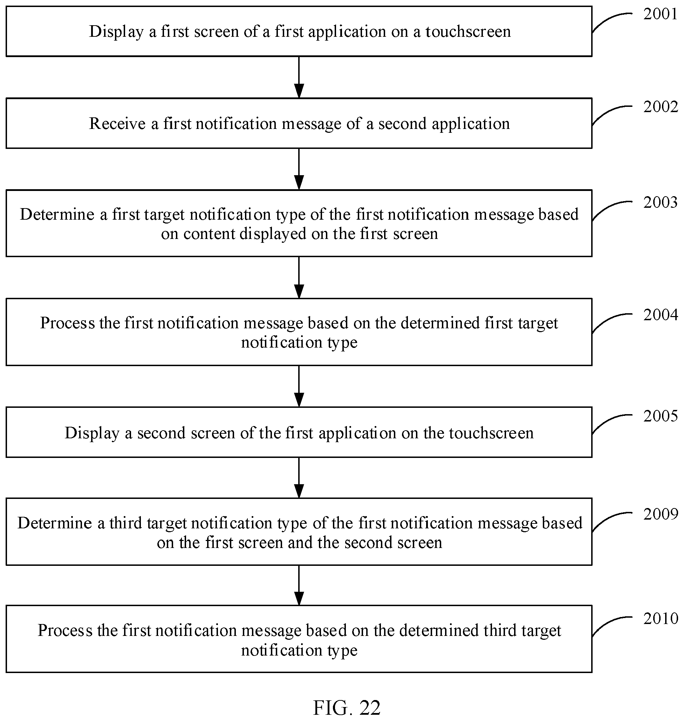

In some other embodiments, after step S2005, referring to FIG. 22, the method may further include the following steps.

S2009. The electronic device determines a third target notification type of the first notification message based on the first interface and the second interface.

For example, the first application is a game, the first interface is the loading interface shown in FIG. 13a, the second interface is the home screen shown in FIG. 13b (excluding the banner 1301), and the first notification message is the foregoing notification message 1. The electronic device may determine, based on the loading interface shown in FIG. 13a and the home screen shown in FIG. 13b (excluding the banner 1301), that a third target notification type of the WeChat notification message 1 is a banner notification type.

S20 10. The electronic device processes the first notification message based on the determined third target notification type.

After the electronic device determines that the third target notification type of the WeChat notification message 1 is a banner notification type in step S2009, referring to FIG. 13b, the electronic device notifies the WeChat notification message 1 by using the banner 1001 in step S2010 if the home screen is displayed.

In other words, the electronic device may determine to perform a plurality of times of processing on a same notification message of the second application based on the different interfaces of the first application displayed in the foreground, so that a user can learn of the notification message as much as possible while dynamically reducing, in real time, interference to the first application displayed in the foreground.

When the different interfaces of the first application separately correspond to different first notification types, and the second application corresponds to the second notification type, step S2009 may specifically include: The electronic device determines the third target notification type that is in notification types in the second intersection set and that is not executed for the first notification message when the electronic device displays the first interface of the first application.

For example, the first application is a game, the first interface is a loading interface, the second interface is a home screen, a first notification type of the loading interface includes a sound notification type and a vibration notification type, and a first notification type of the home screen includes a vibration notification type and a banner notification type. The second application is WeChat, and a second notification type of WeChat includes a vibration notification type, a banner notification type, and a badge notification type. The first notification message is the foregoing WeChat notification message 1. The second intersection set is the vibration notification type and the banner notification type. A notification type used for the WeChat notification message 1 when the electronic device displays the first interface of the first application is the vibration notification type executed by the electronic device for the WeChat notification message 1 on the loading interface. The third target notification type that is in the notification types in the second intersection set and that is not executed for the WeChat notification message 1 when the electronic device displays the loading interface is the banner notification type. Therefore, in step S2010, referring to FIG. 13b, if the electronic device displays the home screen, the electronic device notifies the WeChat notification message 1 by using the banner 1301.

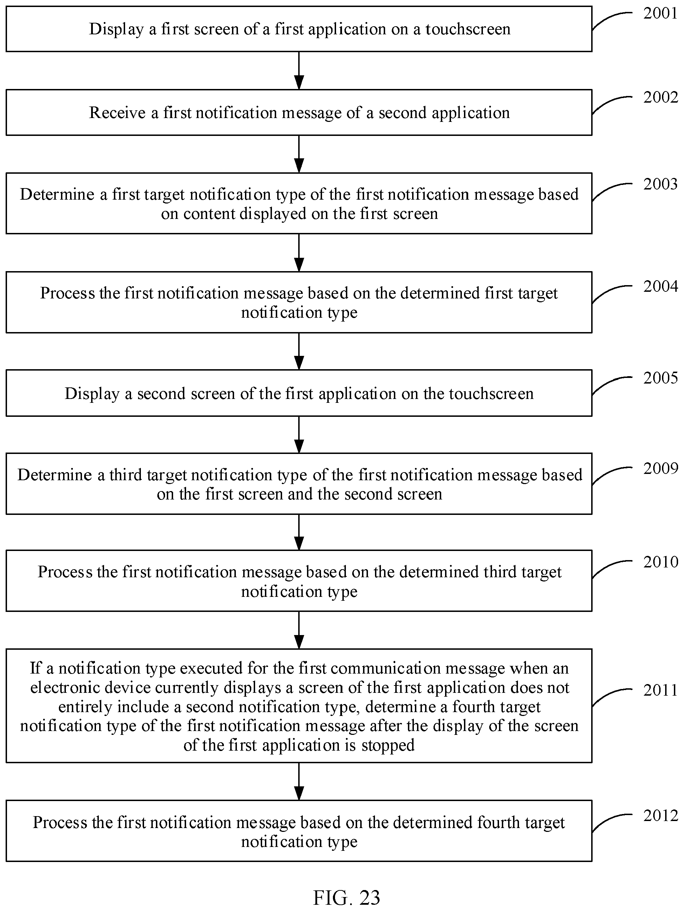

In some other embodiments, after step S2004, step S2008, or step S20 10, the method may further include the following steps S2011 and 2012. For example, referring to FIG. 23, the method may include the following steps.

S2011. If a notification type used for the first notification message when the electronic device currently displays an interface of the first application does not entirely include the second notification type, the electronic device determines a fourth target notification type of the first notification message after stopping displaying the interface of the first application.

S2012. The electronic device processes the first notification message based on the determined fourth target notification type.

For example, after steps S2009 and 2010, the fourth target notification type is a badge notification type. Referring to FIG. 13e, after a game interface exits in the foreground, the electronic device may display the WeChat notification message 1 by using the badge notification type.

In some embodiments, the fourth target notification type is a preset notification type.

In some other embodiments, that the electronic device determines a fourth target notification type of the first notification message in step S2011 may specifically include: The electronic device determines the fourth target notification type that is in the second notification type corresponding to the second application and that is not executed for the first notification message when the electronic device currently displays the interface of the first application.

For example, the first notification message is the WeChat notification message 1, and the second notification type is a vibration notification type, a banner notification type, and a badge notification type. Referring to FIG. 13a to FIG. 13d, notification types used for the WeChat notification message 1 when the electronic device currently displays the loading interface, the home screen, the combat interface, and the shopping interface of the first application are the vibration notification type and the banner notification. A notification type that is not used for the first notification message in the second notification type when the electronic device currently displays the first application is the badge notification type, or in other words, the fourth target notification type is the badge notification type. Therefore, referring to FIG. 13e, after exiting the game interface, the electronic device may notify the WeChat notification message 1 by using the badge notification type.

With reference to the foregoing embodiments and accompanying drawings, an embodiment provides a notification message processing method. The method may be implemented in the electronic device (for example, a mobile phone or a tablet computer) shown in FIG. 1 and FIG. 2. Although not shown in the accompanying drawings, the method may specifically include the following steps.

S2101. An electronic device displays a first interface of a first application on a touchscreen.

S2102. The electronic device receives a first notification message of a second application.

S2103. The electronic device determines a first intersection set of a first notification type corresponding to the first interface of the first application and a second notification type corresponding to the second application, where a notification type in the first intersection set is a first target notification type of the first notification message.

S2104. The electronic device processes the first notification message based on the determined first target notification type.

S2105. The electronic device displays a second interface of the first application on the touchscreen.

S2106. The electronic device receives a second notification message of the second application.

S2107. The electronic device determines a second intersection set of a first notification type corresponding to the second interface of the first application and the second notification type corresponding to the second application, where a notification type in the second intersection set is a second target notification type of the second notification message.

S2108. The electronic device processes the second notification message based on the determined second target notification type.

After step S2105, the method may further include the following step S2109 and step S2110.

S2109. The electronic device determines a third target notification type that is in notification types in the second intersection set and that is not executed for the first notification message when the electronic device currently displays the first application.

S2110. The electronic device processes the first notification message based on the determined third target notification type.

After step S2104, step S2108, or step S2110, the method may further include the following step S2111 and step S2112.

S2111. If a notification type used for the first notification message when the electronic device currently displays an interface of the first application does not entirely include the second notification type, after stopping displaying the interface of the first application, the electronic device determines a fourth target notification type that is in the second notification type corresponding to the second application and that is not executed for the first notification message when the electronic device currently displays the interface of the first application.

S2112. The electronic device processes the first notification message based on the determined fourth target notification type.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of the embodiments of this application.

In the embodiments, function modules of the electronic device may be obtained through division based on the foregoing method example. For example, each function module may be obtained through division for each corresponding function, or two or more functions may be integrated into one processing module. The integrated module may be implemented in a form of hardware. It should be noted that, in this embodiment, division into the modules is an example, and is merely a logical function division. In actual implementation, another division manner may be used.

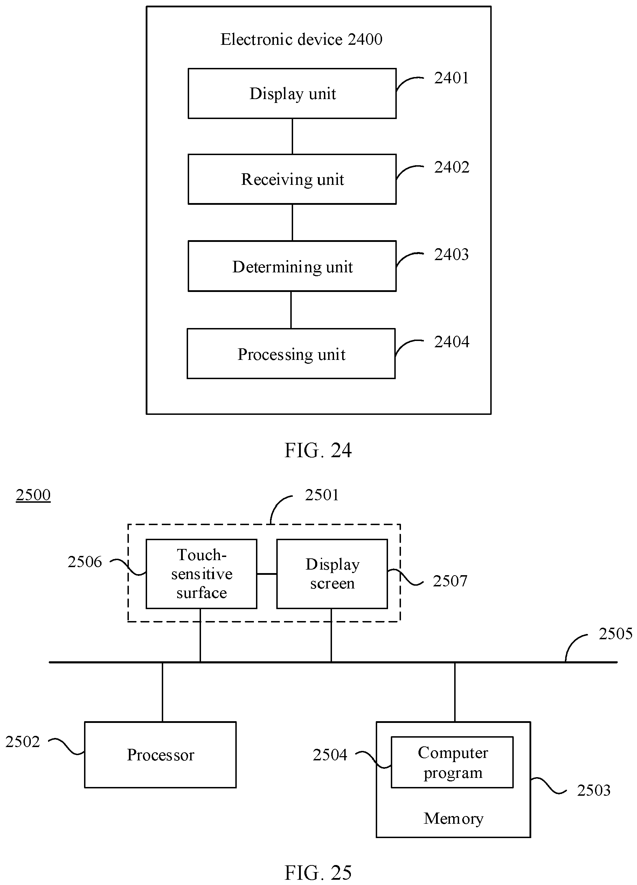

When each function module is obtained through division for each corresponding function, FIG. 24 is a possible schematic composition diagram of an electronic device 2400 in the foregoing embodiment. As shown in FIG. 24, the electronic device 2400 may include a display unit 2401, a receiving unit 2402, a determining unit 2403, and a processing unit 2404.

The display unit 2401 may be configured to support the electronic device 3600 in performing step S2001, step S2005, step S2101, and step S2105, and/or is used in another process of the technology described in this specification.

The receiving unit 2402 may be configured to support the electronic device 2400 in performing step S2002, step S2006, step S2102, step S2106, and the like, and/or is used in another process of the technology described in this specification.

The determining unit 2403 may be configured to support the electronic device 2400 in performing step S2003, step S2007, step S2009, step S2011, step S2103, step S2107, step S2109, step S2111, and the like, and/or is used in another process of the technology described in this specification.

The processing unit 2404 may be configured to support the electronic device 2400 in performing step S2004, step S2008, step S2010, step S2012, step S2104, step S2108, step S2110, step S2112, and the like, and/or is used in another process of the technology described in this specification. It should be noted that all related content of the steps related to the foregoing method embodiment may be cited in function descriptions of corresponding function modules. Details are not described herein again.

The electronic device provided in this embodiment is configured to perform the foregoing notification message processing method, and therefore an effect that is the same as that of the foregoing implementation method can be achieved.

When an integrated unit is used, the electronic device may include a processing module, a storage module, and a communications module. The processing module may be configured to control and manage an action of the electronic device, for example, may be configured to support the electronic device in performing steps performed by the display unit 2401, the determining unit 2403, and the processing unit 2404. The storage module may be configured to support the electronic device in storing first notification types separately corresponding to different interfaces of a first application and a second notification type corresponding to a second application, and storing program code, data, and the like. The communications module may be configured to support the electronic device in communicating with another device, for example, may be configured to support the electronic device in performing steps performed by the receiving unit 2402.

The processing module 81 may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor (digital signal processing, DSP) and a microprocessor. The storage module may be a memory. The communications module may be specifically a device that interacts with another electronic device, for example, a radio frequency circuit, a Bluetooth chip, or a Wi-Fi chip.

In an embodiment, when the processing module is a processor and the storage module is a memory, the electronic device in this embodiment may be a device having the structure shown in FIG. 1.

As shown in FIG. 25, an embodiment further provides an electronic device 2500. The electronic device may include a touchscreen 2501. The touchscreen 2501 may include a touch-sensitive surface 2506 and a display interface 2507, one or more processors 2502, a memory 2503, and one or more computer programs 2504. The foregoing components may be connected through one or more communications buses 2505. The one or more computer programs 2504 are stored in the memory 2503, and are configured to be executed by the one or more processors 2502. The one or more computer programs 2504 include an instruction. In some embodiments, the instruction may be used to perform steps performed by the electronic device in FIG. 21 and the corresponding embodiment. In some other embodiments, the foregoing instruction may be further used to perform steps performed by the electronic device in FIG. 22 and the corresponding embodiment. In some other embodiments, the foregoing instruction may be further used to perform steps performed by the electronic device in FIG. 23 and the corresponding embodiment. In some other embodiments, the foregoing instruction may be further used to perform steps 2101 to 2112 performed by the electronic device in the foregoing embodiment. Certainly, the electronic device includes but is not limited to the foregoing listed components. For example, the electronic device may further include a radio frequency circuit, a positioning apparatus, and a sensor. When the electronic device includes another component, the electronic device 2500 may be the electronic device 100 shown in FIG. 1.

An embodiment further provides a computer storage medium. The computer storage medium stores a computer instruction, and when the computer instruction runs on an electronic device, the electronic device is enabled to perform the related method steps, to implement the notification message processing method in the foregoing embodiment.

An embodiment further provides a computer program product. When the computer program product runs on a computer, the computer is enabled to perform the related steps, to implement the notification message processing method in the foregoing embodiment.

In addition, an embodiment of this application further provides an apparatus. The apparatus may be specifically a chip, a component, or a module. The apparatus may include a processor and a memory that are connected. The memory is configured to store a computer executable instruction, and when the apparatus runs, the processor may execute the computer executable instruction stored in the memory, so that the chip performs the notification message processing method in the foregoing method embodiment.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects of the corresponding method provided above. Details are not described herein again.

It should be noted that, in this embodiment, division into the units is an example, and is merely a logical function division. In actual implementation, another division manner may be used. Functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, the procedure or functions according to the foregoing embodiments are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For a purpose of explanation, the foregoing description is described with reference to a specific embodiment. However, the foregoing example discussion is not intended to be detailed, and is not intended to limit this application to a disclosed precise form. According to the foregoing teaching content, many modification forms and variation forms are possible. Embodiments are selected and described to entirely illustrate the principles of this application and practical application of the principles, so that other persons skilled in the art can make full use of this application and various embodiments that have various modifications applicable to conceived specific usage.

## Claims

1. A notification message processing method, performed by an electronic device, comprising:
displaying (2001) a first interface of a first application on a touchscreen;
receiving (2002) a first notification message of a second application;
determining (2003) a first target notification type of the first notification message based on the first interface;
processing (2004) the first notification message based on the first target notification type;
displaying (2005) a second interface of the first application on the touchscreen;
receiving (2006) a second notification message of the second application;
determining (2007) a second target notification type of the second notification message based on the second interface; and
processing (2008) the second notification message based on the second target notification type, wherein
the first target notification type is different from the second target notification type.

2. The method according to claim 1, wherein different interfaces of the first application separately correspond to first notification types, and the second application corresponds to a second notification type;
the determining a first target notification type of the first notification message based on the first interface comprises:
determining a first intersection set of a first notification type corresponding to the first interface of the first application and the second notification type, wherein a notification type in the first intersection set is the first target notification type; and
the determining a second target notification type of the second notification message based on the second interface comprises:
determining a second intersection set of a first notification type corresponding to the second interface of the first application and the second notification type, wherein a notification type in the second intersection set is the second target notification type.

3. The method according to claim 1 or 2, wherein after the displaying a second interface of the first application on the touchscreen, the method further comprises:
determining (2009) a third target notification type of the first notification message based on the first interface and the second interface; and
processing (2010) the first notification message based on the third target notification type.

4. The method according to any one of claims 1 to 3, wherein the first application is a game, and the first interface is a loading interface, a home screen, a combat interface, or a shopping interface.

5. An electronic device (2500), comprising:
a touchscreen (2501);
one or more processors (2502);
a memory (2503);
a plurality of application; and
one or more computer programs (2504), wherein the one or more computer programs are stored in the memory, the one or more computer programs comprise an instruction, and when the instruction is executed by the electronic device, the electronic device is enabled to perform the following steps:
displaying a first interface of a first application on the touchscreen;
receiving a first notification message of a second application;
determining a first target notification type of the first notification message based on the first interface;
processing the first notification message based on the first target notification type;
displaying a second interface of the first application on the touchscreen;
receiving a second notification message of the second application;
determining a second target notification type of the second notification message based on the second interface; and
processing the second notification message based on the second target notification type, wherein
the first target notification type is different from the second target notification type.

6. The electronic device according to claim 5, wherein different interfaces of the first application separately correspond to first notification types, and the second application corresponds to a second notification type; and when the instruction is executed by the electronic device (2500), the electronic device (2500) is enabled to specifically perform the following steps:
determining a first intersection set of a first notification type corresponding to the first interface of the first application and the second notification type, wherein a notification type in the first intersection set is the first target notification type; and
determining a second intersection set of a first notification type corresponding to the second interface of the first application and the second notification type, wherein a notification type in the second intersection set is the second target notification type.

7. The electronic device (2500) according to claim 5 or 6, wherein when the instruction is executed by the electronic device, the electronic device is enabled to further perform the following steps:
after the second interface of the first application is displayed on the touchscreen, determining a third target notification type of the first notification message based on the first interface and the second interface; and
processing the first notification message based on the third target notification type.

8. The electronic device (2500) according to any one of claims 5 to 7, wherein the first application is a game, and the first interface is a loading interface, a home screen, a combat interface, or a shopping interface.

## Patentansprüche

1. Benachrichtigungsnachrichtenverarbeitungsverfahren, durchgeführt durch eine elektronische Vorrichtung, umfassend:
Anzeigen (2001) einer ersten Oberfläche einer ersten Anwendung auf einem Berührungsbildschirm;
Empfangen (2002) einer ersten Benachrichtigungsnachricht einer zweiten Anwendung;
Bestimmen (2003) eines ersten Zielbenachrichtigungstyps der ersten Benachrichtigungsnachricht basierend auf der ersten Oberfläche;
Verarbeiten (2004) der ersten Benachrichtigungsnachricht basierend auf dem ersten Zielbenachrichtigungstyp,
Anzeigen (2005) einer zweiten Oberfläche der ersten Anwendung auf dem Berührungsbildschirm;
Empfangen (2006) einer zweiten Benachrichtigungsnachricht der zweiten Anwendung;
Bestimmen (2007) eines zweiten Zielbenachrichtigungstyps der zweiten Benachrichtigungsnachricht basierend auf der zweiten Oberfläche; und
Verarbeiten (2008) der zweiten Benachrichtigungsnachricht basierend auf dem zweiten Zielbenachrichtigungstyp, wobei
sich der erste Zielbenachrichtigungstyp von dem zweiten Zielbenachrichtigungstyp unterscheidet.

2. Verfahren nach Anspruch 1, wobei unterschiedliche Oberflächen der ersten Anwendung separat ersten Benachrichtigungstypen entsprechen und die zweite Anwendung einem zweiten Benachrichtigungstyp entspricht,
das Bestimmen eines ersten Zielbenachrichtigungstyps der ersten Benachrichtigungsnachricht basierend auf der ersten Oberfläche Folgendes umfasst:
Bestimmen einer ersten Schnittmenge eines ersten Benachrichtigungstyps, der der ersten Oberfläche der ersten Anwendung entspricht, und des zweiten Benachrichtigungstyps, wobei ein Benachrichtigungstyp in der ersten Schnittmenge der erste Zielbenachrichtigungstyp ist; und
das Bestimmen eines zweiten Zielbenachrichtigungstyps der zweiten Benachrichtigungsnachricht basierend auf der zweiten Oberfläche Folgendes umfasst:
Bestimmen einer zweiten Schnittmenge eines ersten Benachrichtigungstyps, der der zweiten Oberfläche der ersten Anwendung entspricht, und des zweiten Benachrichtigungstyps, wobei ein Benachrichtigungstyp in der zweiten Schnittmenge der zweite Zielbenachrichtigungstyp ist.

3. Verfahren nach Anspruch 1 oder 2, wobei das Verfahren nach dem Anzeigen einer zweiten Oberfläche der ersten Anwendung auf dem Berührungsbildschirm ferner Folgendes umfasst:
Bestimmen (2009) eines dritten Zielbenachrichtigungstyps der ersten Benachrichtigungsnachricht basierend auf der ersten Oberfläche und der zweiten Oberfläche; und
Verarbeiten (2010) der ersten Benachrichtigungsnachricht basierend auf dem dritten Zielbenachrichtigungstyp.

4. Verfahren nach einem der Ansprüche 1 bis 3, wobei die erste Anwendung ein Spiel ist und die erste Oberfläche eine Ladeoberfläche, ein Startbildschirm, eine Kampfoberfläche oder eine Einkaufsoberfläche ist.

5. Elektronische Vorrichtung (2500), umfassend:
einen Berührungsbildschirm (2501);
einen oder mehrere Prozessoren (2502);
einen Speicher (2503);
mehrere Anwendungen; und
ein oder mehrere Computerprogramme (2504), wobei das eine oder die mehreren Computerprogramme in dem Speicher gespeichert sind, das eine oder die mehreren Computerprogramme eine Anweisung umfassen und eine Ausführung der Anweisung durch die elektronische Vorrichtung ermöglicht, dass die elektronische Vorrichtung die folgenden Schritte durchführt:
Anzeigen einer ersten Oberfläche einer ersten Anwendung auf dem Berührungsbildschirm;
Empfangen einer ersten Benachrichtigungsnachricht einer zweiten Anwendung;
Bestimmen eines ersten Zielbenachrichtigungstyps der ersten Benachrichtigungsnachricht basierend auf der ersten Oberfläche;
Verarbeiten der ersten Benachrichtigungsnachricht basierend auf dem ersten Zielbenachrichtigungstyp,
Anzeigen einer zweiten Oberfläche der ersten Anwendung auf dem Berührungsbildschirm;
Empfangen einer zweiten Benachrichtigungsnachricht der zweiten Anwendung;
Bestimmen eines zweiten Zielbenachrichtigungstyps der zweiten Benachrichtigungsnachricht basierend auf der zweiten Oberfläche; und
Verarbeiten der zweiten Benachrichtigungsnachricht basierend auf dem zweiten Zielbenachrichtigungstyp, wobei
sich der erste Zielbenachrichtigungstyp von dem zweiten Zielbenachrichtigungstyp unterscheidet.

6. Elektronische Vorrichtung nach Anspruch 5, wobei unterschiedliche Oberflächen der ersten Anwendung separat ersten Benachrichtigungstypen entsprechen und die zweite Anwendung einem zweiten Benachrichtigungstyp entspricht, und eine Ausführung der Anweisung durch die elektronische Vorrichtung (2500) ermöglicht, dass die elektronische Vorrichtung (2500) insbesondere die folgenden Schritte durchführt:
Bestimmen einer ersten Schnittmenge eines ersten Benachrichtigungstyps, der der ersten Oberfläche der ersten Anwendung entspricht, und des zweiten Benachrichtigungstyps, wobei ein Benachrichtigungstyp in der ersten Schnittmenge der erste Zielbenachrichtigungstyp ist; und
Bestimmen einer zweiten Schnittmenge eines ersten Benachrichtigungstyps, der der zweiten Oberfläche der ersten Anwendung entspricht, und des zweiten Benachrichtigungstyps, wobei ein Benachrichtigungstyp in der zweiten Schnittmenge der zweite Zielbenachrichtigungstyp ist.

7. Elektronische Vorrichtung (2500) nach Anspruch 5 oder 6, wobei eine Ausführung der Anweisung durch die elektronische Vorrichtung ermöglicht, dass die elektronische Vorrichtung ferner die folgenden Schritte durchführt::
nachdem die zweite Oberfläche der ersten Anwendung auf dem Berührungsbildschirm angezeigt wird, Bestimmen eines dritten Zielbenachrichtigungstyps der ersten Benachrichtigungsnachricht basierend auf der ersten Oberfläche und der zweiten Oberfläche; und
Verarbeiten der ersten Benachrichtigungsnachricht basierend auf dem dritten Zielbenachrichtigungstyp.

8. Elektronische Vorrichtung (2500) nach einem der Ansprüche 5 bis 7, wobei die erste Anwendung ein Spiel ist und die erste Oberfläche eine Ladeoberfläche, ein Startbildschirm, eine Kampfoberfläche oder eine Einkaufsoberfläche ist.

## Revendications

1. Procédé de traitement de messages de notification, réalisé par un dispositif électronique, comprenant :
l'affichage (2001) d'une première interface d'une première application sur un écran tactile ;
la réception (2002) d'un premier message de notification d'une deuxième application ;
la détermination (2003) d'un premier type de notification cible du premier message de notification sur la base de la première interface ;
le traitement (2004) du premier message de notification sur la base du premier type de notification cible :
l'affichage (2005) d'une deuxième interface de la première application sur l'écran tactile ;
la réception (2006) d'un deuxième message de notification de la deuxième application ;
la détermination (2007) d'un deuxième type de notification cible du deuxième message de notification sur la base de la deuxième interface ; et
le traitement (2008) du deuxième message de notification sur la base du deuxième type de notification cible, le premier type de notification cible étant différent du deuxième type de notification cible.

2. Procédé selon la revendication 1, différentes interfaces de la première application correspondant séparément à des premiers types de notification, et la deuxième application correspondant à un deuxième type de notification ;
la détermination d'un premier type de notification cible du premier message de notification sur la base de la première interface comprenant :
la détermination d'un premier ensemble d'intersection d'un premier type de notification correspondant à la première interface de la première application et du deuxième type de notification, un type de notification dans le premier ensemble d'intersection étant le premier type de notification cible ; et
la détermination d'un deuxième type de notification cible du deuxième message de notification basé sur la deuxième interface comprenant :
la détermination d'un deuxième ensemble d'intersections d'un premier type de notification correspondant à la deuxième interface de la première application et du deuxième type de notification, un type de notification dans le deuxième ensemble d'intersections étant le deuxième type de notification cible.

3. Procédé selon la revendication 1 ou 2, après l'affichage d'une deuxième interface de la première application sur l'écran tactile, le procédé comprenant en outre :
la détermination (2009) d'un troisième type de notification cible du premier message de notification sur la base de la première interface et de la deuxième interface ; et
le traitement (2010) du premier message de notification sur la base du troisième type de notification cible.

4. Procédé selon l'une quelconque des revendications 1 à 3, la première application étant un jeu, et la première interface étant une interface de chargement, un écran d'accueil, une interface de combat ou une interface d'achat.

5. Dispositif électronique (2500), comprenant :
un écran tactile (2501) ;
un ou plusieurs processeurs (2502) ;
une mémoire (2503) ;
une pluralité d'applications ; et
un ou plusieurs programmes informatiques (2504), le ou les programmes informatiques étant stockés dans la mémoire, le ou les programmes informatiques comprenant une instruction, et lorsque l'instruction est exécutée par le dispositif électronique, le dispositif électronique étant activé pour réaliser les étapes suivantes :
l'affichage d'une première interface d'une première application sur l'écran tactile ;
la réception d'un premier message de notification d'une deuxième application ;
la détermination d'un premier type de notification cible du premier message de notification sur la base de la première interface ;
le traitement du premier message de notification sur la base du premier type de notification cible ;
l'affichage d'une deuxième interface de la première application sur l'écran tactile ;
la réception d'un deuxième message de notification de la deuxième application ;
la détermination d'un deuxième type de notification cible du deuxième message de notification sur la base de la deuxième interface ; et
le traitement du deuxième message de notification sur la base du deuxième type de notification cible, le premier type de notification cible étant différent du deuxième type de notification cible.

6. Dispositif électronique selon la revendication 5, différentes interfaces de la première application correspondant séparément à des premiers types de notification, et la deuxième application correspondant à un deuxième type de notification ; et lorsque l'instruction est exécutée par le dispositif électronique (2500), le dispositif électronique (2500) étant activé pour réaliser spécifiquement les étapes suivantes :
la détermination d'un premier ensemble d'intersection d'un premier type de notification correspondant à la première interface de la première application et du deuxième type de notification, un type de notification dans le premier ensemble d'intersection étant le premier type de notification cible ; et
la détermination d'un deuxième ensemble d'intersections d'un premier type de notification correspondant à la deuxième interface de la première application et du deuxième type de notification, un type de notification dans le deuxième ensemble d'intersections étant le deuxième type de notification cible.

7. Dispositif électronique (2500) selon la revendication 5 ou 6, lorsque l'instruction est exécutée par le dispositif électronique, le dispositif électronique étant activé pour réaliser en outre les étapes suivantes :
après l'affichage de la deuxième interface de la première application sur l'écran tactile, la détermination d'un troisième type de notification cible du premier message de notification sur la base de la première interface et de la deuxième interface ; et
le traitement du premier message de notification sur la base du troisième type de notification cible.

8. Dispositif électronique (2500) selon l'une quelconque des revendications 5 à 7, la première application étant un jeu, et la première interface étant une interface de chargement, un écran d'accueil, une interface de combat ou une interface d'achat.
